# EUROPEAN PATENT APPLICATION

(11) **EP 1 217 035 A1**
(43) Date of publication of application: **26.06.2002**
(21) Application number: 00610143.0
(22) Date of filing: 22.12.2000
(51) Int. Cl.: C08K 3/34, C08L 101/00

(54) **Matrix containing nephrite jade powder as a main component and process for preparing the same**

(71) Applicant: Kim, Jun-Han, Chunchon-city, Kangwon-do (KR); Dae Il Mining Co., Ltd., Chunchon-city, Kangwon-do (KR)
(72) Inventor: Kim, Jun-Han, Seoksadong, Chunchon-city Kangwon-do (KR)
(74) Representative: Lind, Charles Leo

(57) **Abstract**

There are provided a matrix containing nephrite jade powder as a main component and a process for preparing the same. The matrix is prepared by adding a sample of 360-1000 mesh particle size, containing 1-4.5 % by weight of nephrite jade powder, 1-3 % by weight of silicone powder and 0.5-1 % by weight of talcum powder, to raw material resin, based on the total weight of the raw material resin for molding a variety of products. Thus, the matrix can enhance physical and mechanical strengths of molded products made using by the same and has excellent effects that are advantageous to human body.

## Description

### BACKGROUND OF THE INVENTION

### 1. Field of the Invention

The present invention relates to a matrix containing nephrite jade powder and a process for preparing the same, and more particularly, to a matrix containing nephrite jade powder obtained by adding silicone powder, talcum powder and nephrite jade powder of very fine combination weave fibrous microstructure of cryptocrystalline tremolite type, to molded articles.

### 2. Description of the Related Art

As is generally known, jade is largely divided into jadeite and nephrite jade, and jadeite belongs to pyroxene family and has monoclinic system comprising silicic acid, aluminum oxide and soda. It is an intimate mass, and the hardness is comparable to that of crystal. It is transparent or translucent of black, blue green or green color. People usually say the jadeite as "jade". Nephrite jade is an inorganic material having monoclinic system of inosilicates. The quality of nephrite jade is determined by the fine structure, and the finer the fiber, the better is the quality (RESOURCES PROMOTION 1993, Korea Resources Corporation).

According to a German literature Mauda Palmer Die Verborgene, "KRAFF der KRISTALLE und der EDELSTEINE", the two different ores, jadeite and nephrite jade, both comprises silicon and oxygen, as most of other jewels, consists of lots of crystals and aggregates of microparticles having elements, Ca, Fe and Mg, which are good for human body, while jadeite comprises sodium and aluminum component. Thus, it has been recently reported that nephrite jade, when attached to the body, provides a considerable effect to the treatment of hypertension, diabetes, circulation system disorder, heart disease and kidney disorder. This fact is also described in "Die Magie der Edelsterine" by Hedy Brusisu of Germany.

A classic of traditional oriental medicine, "Treasures in oriental medicine" describes that if jade is added to black rice liquor to alter the liquor to water, and intake of jade powder in a size like sesame seed is good for the discharge of the waste material. Also, it describes that when jade powder (1 part by volume), rice (1 part by volume) and white dew (1 part by volume) are cooked to rice in a copper vessel, the jade powder becomes water (so called jade-liquor, the "divine jade water"). "Plants of Divine Agriculture", "Plants of Tang Age" and "List of Basic Plants" describe that intake of jade powder in a size like sesame seed enriches five viscera and six entrails and completely discharges the waste materials. In addition, it is effective to digestive system by removing heat from stomach, and it is good for the treatment of bronchus asthma, body fever and heavy feeling in the chest as well as thirst. When jade powder is taken for a long time, body becomes easy and light, function of lung is enhanced, making voice by vocal cords becomes easier. Also, it is good for throat, nutrition of hair, functions of five viscera and six entrails and treatment of nervous diseases such as stress.

Besides, the components of nephrite jade reveal excellent functions to the body without side effect. For example, intake of white jade powder is good for the tension or cramps in the muscles and rubbing with nephrite jade on the hurt skin for several days removes the scar.

However, as nephrite jade does not exist in a large amount in the nature, the use thereof is restricted to jewel personal ornaments such as necklace, ring, bracelet, or the like in spite of the well known excellent medical functions. In addition, the processing of nephrite requires delicate efforts of experts having much experiences, and nephrite jade is economically disadvantageous having very high price, so that the development as a general practical goods using nephrite jade are intensively needed.

In fabricating molded articles, bio-ceramic or elvan may be added, which is not, however, effective in view of the strength of the mineral.

Having paid attention to the above-described excellent medical effects of nephrite jade, the applicant of the present invention intensively studied for many years and gained several patents in Korea and foreign countries, including Korean Patent No. 112812, entitled "Glass products containing nephrite jade powder and preparation method thereof"

### SUMMARY OF THE INVENTION

Therefore, it is an object of the present invention to provide a matrix prepared by adding, based on the total weight of raw material resin, a predetermined amount of a mixture sample of very fine combination weave fibrous microstructure of cryptocrystalline tremolite type, silicone powder and talcum powder and making the mixture into an effective component, by a conventional molding process, and a process for preparing the same. The matrix of the present invention can show excellent effects of treating pathological symptoms (headache, numb feeling, indigestion, insomnia, or the like), removing impurities (such as heavy metals), improving the quality of water, promoting the growth of animals or plants by virtue of useful waves generated from a mixture sample contained in the products made of the matrix, as well as improving physical strengths of a variety of goods in the field of medical goods, utensil goods, equipment for leisure time, vessels, interior goods, agricultural goods, industrial goods, fishery goods, traffic goods, transportation goods, equipment for sports, electronic instruments, precision instrument, or the like.

To accomplish the above object of the present invention, there is provided a matrix containing nephrite-jade powder as a main component, the matrix prepared by adding a sample containing 1-4.5 % by weight of nephrite jade powder, 1-3 % by weight of silicone powder and 0.5-1 % by weight of talcum powder, the sample having the particle size of 360-1000 mesh, to raw material resin for forming molded articles, based on the total weight of the raw material resin.

According to another aspect of the present invention, there is provided a process for preparing a matrix containing nephrite jade powder as a main component, including the steps of adding a sample comprising 1-4.5 % by weight of nephrite jade powder, 1-3 % by weight of silicone powder and 0.5-1 % by weight of talcum powder, the sample having the particle size of 360-1000 mesh, to raw material resin for forming molded articles, based on the total weight of the raw material resin, heating the mixture at a temperature of 135-145°C, and molding the resultant mixture to convert the same into a compound.

Here, the jade ore is cryptocrystalline tremolite of a negative value of σ¹⁸O, having a composition shown as follows.

| <Semi-quantitative Analysis of the Nephrite Jade Powder used in the Present Invention (%)> | | | |
|---|---|---|---|
| Silicon | 34 | Tin | 0.024 |
| Magnesium | 10 | Beryllium | 0.00072 |
| Calcium | 4.9 | Silver | 0.0013 |
| Iron | 0.23 | Titanium | 0.0038 |
| Aluminum | 0.16 | Nickel | 0.0028 |
| Copper | 0.17 | Chromium | 0.0030 |
| Cobalt | 0.046 | Other element | 0 |
| Manganese | 0.14 | | |

The particle size of the nephrite jade powder used in the preparation of the matrix according to the present invention may be selected as considering the shape and use of the molded article. Generally, nephrite jade powder having the particle size of 100-360 mesh is preferably used. If the shape of the molded article is complicated, or increased ductility is required, for example, in case that the article has a small thickness, finer particles (about 360-1000 mesh) are preferable used.

If the particle size is higher than the range, it is disadvantageous because the surface roughness of the article becomes larger, while the particle size is lower than the range, difficulties occur in the pulverization.

If the amount of nephrite jade added to the articles is less than 1%, the effect of nephrite jade cannot be expected. The larger the amount, the better effect of nephrite jade occurs. However, if the amount is beyond the range, the properties of the raw material resin (in particular, ductility) is lowered to make the article brittle, molding flowability is lowered, and increase the cost of the product owing to the high price of nephrite jade. Thus, the amount of nephrite jade is suitably approximately 4.5 % by weight or less based on the total weight of raw material resin.

Also, in the sample, since the silicone powder is added as an additive for compensating for the mineral characteristic of the nephrite jade powder, the amount of the silicone powder is preferably added to be less than that of the nephrite jade powder added. Also, since the talcum powder is added for providing the surface smoothness of molded articles, the talcum powder is preferably added in an amount small in the range of not impairing the characteristics of the nephrite jade powder or the silicone powder.

Also, the matrix is made into a compound by adding the sample to raw material, heating the resultant mixture and then molding the resultant mixture by a general molding process. Since nephrite jade has excellent heat resistance, a thermal change does not occur to the nephrite jade even by the heating process, while maintaining the intrinsic properties thereof.

The thermoplastic synthetic resins as raw material of the plastic materials described in the specification includes polyvinyl chloride (PVC), polyvinyl acetate (PVAC), polyvinyl alcohol (PVA, PVAL), polyvinyl acetal, polyvinyl formal (PVFM), polyvinyl butyral (PVB), polyvinylidene chloride (PVDC), polyvinylidene chloride-polyvinyl chloride copolymer, polyethylene (PE), polypropylene (PP), polystyrene (PS), styrene-butadiene copolymer (SB, HIPS), polystyrene foam (EPS, FS), acrylonitrile-styrene copolymer (AS, SAN), acrylonitrile-butadiene-styrene copolymer (ABS), ethylene-vinyl acetate copolymer (EVA), ionomer, polycarbonate (PC), polyvinyl ether-polyvinyl methyl ether, polyvinyl ketone, polytetrafluoroethylene (PTFE), polytrifluorochloroethylene (PCTFE), polyvinyl fluoride, polyvinylidene fluoride, tetrafluoroethylene-hexafluoropropylene copolymer, polyamide (PA, Nylon), polyacrylamide, polyacrylonitrile (AN), polyester, polyethylene terephthalate (PET), polybutyrene terephthalate (PBT), polyacetal, polyoxymethylene (POM), polyethylene oxide, polyphenylene oxide (PPO), polyacrylate (.dbd.polyacrylic ester), polymethacrylate (.dbd.polymethacrylic ester), polyurethane (PUR.AU.EU), polyphenylene sulfide (PPS), polysulfone (PSU), polymethacrylonitrile, or the like.

Thermosetting synthetic resins include phenol-formaldehyde (PF), urea formaldehyde (UF), melamine-formaldehyde (MF), unsaturated polyester (UP), polydiallyl phthalate (PDAP, DAP), aniline-formaldehyde, epoly (EP), furan, xylene-formaldehyde, sulfonamide-formaldehyde, silicone (SI), polyurethane foam, formaldehyde resin, ketone resin, or the like.

The products made of the matrix of the present invention can be prepared, in case of the preparation of plastics, as plastic film (industrial use, agricultural use), plastic *lump,* plastic upper board, plastic bar, pipe and profile, plastic leather, plastic conveyor belt, vinyl wall paper, recycled plastic raw material(powder phase), other plastic primary shaped products, and can be applied, in case of preparation of plastic foamed molded articles, for foamed polystyrene(styrofoam etc.), and industrial foamed molded articles(including soft and hard products).

For the reinforced plastic molded products, plastics including plastic machinery parts(adding durable, special reinforcing material), and other reinforced plastic molded products can be produced, and for industrial plastic shaping products, plastic electric and electronic machine parts, plastic autocar parts, plastic-made cabinet for home appliances(cabinet for T.V, audio or sewing machine), plastic furniture and other plastic industrial machine parts(pure plastics) can also be produced.

Also household plastic products such as plastic table and kitchen wares(tableware, dish, cup, knife, spoon and so forth), plastic hygiene and cosmetic articles(washbowl, bathtub, soap case, waste basket and so on), plastic button, plastic accessories and other household plastic molded products can be prepared, and plastic molded package vessels such as plastic box(fish box etc.), plastic bottle or similar vessels, and other plastic package vessels can be produced.

Namely, molded products made of the synthetic resin matrix of the present invention can be prepared as various products according to the classification based on the synthetic resin raw material as follows.
PE: bottle, tube, wire coat, food package, film and pipe
PS: doll, kitchen articles, tableware, insulating materials, material for packing, office supplies and parts for related industries such as autocar, electrics and electronics
PP: container, pipe, film, artificial leather and parts for autocar
AS: kitchen ware, telephone parts and pipe
PVC: pipe, film, bottle, doll, disk, food container and wire coat
Acryl: optical lens, autocar supplies and protecting plate for T.V.
PA: bearing, hoses and film
PC: electric parts
Fluororesin: gasket and coatings for frying pan
Polyester: various springs(elastic plate), usage for metal insert and gear bearing
PF: telephone parts, electric goods, cup and car handle
UF: button, lighting apparatus, clock, container, tableware and radio case
MF: bathtub, button, safety hat and tableware

Unsaturated Polyester: airplane parts, fuel tank, pipe, car body, helmet and fishing rod
EP: autocar parts, electric parts and medical supplies
PDAP: electric parts, terminal board and micro-switch board
PUR: wire coat and rubber
SI: tape, releasing agent and defoaming agent
Furan: laminated plate and material for electric insulation
Xylene: laminated plate molded goods
Aniline: goods for electric insulation and laminated plate

In addition, ABS, a high-quality resin which is positioned between common resin and engineering plastic, can produce exterior finishing material for electric and electronic goods, and autocar parts as well as telephone, radio, toys, dolls, and
in agricultural field, protection for chicken stall against chilling, relieving agent for grain against vermin damage, vinyl house and pot for tree planting,
in fishery field, container, artificial seaweeds and fishing implements(rope, fishing net, floating element),
in food field, vessel and package for food,
in medical field, blood vessel, the gullet, the urethra, the ureter and articulation used in inside of the body, and teeth, eyes, nose, ear and skin used in outside of the body, as well as syringe and diaper,
in pharmaceutical field, granules with coating and tablets,
in acoustic field, soundproofing agent and anti-vibration agent,
in optical field, spectacle lens, contact lens, safety glasses, sun glasses and parts thereof,
in textile field, nonwoven, carpet and rain coat,
in paper field, PE processed paper and plastic foam paper(ps paper),
in office supplies field, equipment such as desk and chair, writing materials such as ball pen,
in household goods field, tableware such as kitchen board, dish washing stand and dish, table supplies, and goods for baby such as doll, toy and milk bottle, as well as basket, vegetable box and bathroom goods,
in sports field, boat, sports car, skate, tennis racket and golf gloves, in machine field, axial arm, brake shoe, or the like in flight field, wings(main, rear, assist), fuselage, window, bulletin board and safety glass,
in shipping field, ship, porthole frame, porthole and door for cabin,
in autocar and vehicle field, safety glass, bumper, adiabatic material for car body and foamed cushion for sheet,
in communication field, telephone, switchboard and terminal box for telephone,
in electronic field, organic semiconductor,
in electric field, electric fan, washing machine, television, radio, refrigerator and hairdressing tools,
in building field, interior- and exterior-finishing materials such as ceiling material, wall material, floor material, tile and board for verandah,
in engineering works field, admixture(for example, cement), water-protecting plate and tree-planting in desert,
in information and printing fields, synthetic resin type, synthetic resin reprint, synthetic resin electric mold and magnetic tape,
in atomic energy field, reaction vessel and various coating materials, in space development field, storage tank for liquid hydrogen and liquid oxygen, and
in packing container field, plastic container and alternate plastic film.

Also, the synthetic resin products made of the matrix of the present invention may be applied to a variety of personal ornaments such as necklaces, bracelets, rings or the like, as well as utensil goods such as tableware.

The molded products have been used above in a non-limiting sense and can be a variety of products necessary or intended to mixing articles. The molding process for synthetic resin matrix according to the present invention is a well-known method and follows the methods, that is, injection molding (thermoplastic resin), press molding (thermosetting resin), transfer molding (thermosetting resin), extrusion molding (thermoplastic resin), blow molding (thermoplastic resin), vacuum molding (thermoplastic resin), compression molding (thermoplastic resin film), foaming molding (thermoplastic resin), or deposit molding (thermoplastic resin).

Another object of the present invention is to maximizing the utilization of nephrite jade powder which is remainder or waste of the mining or minute processing of nephrite jade ornaments.

Therefore, a variety of goods for practical use which have the inherent properties of nephrite jade may be obtained with far lower cost than that of the products made of nephrite jade itself. Besides, the products made of the matrix of the present invention have enhanced mechanical or thermal properties as compared to those not containing nephrite jade.

### BRIEF DESCRIPTION OF THE DRAWINGS

The above object and advantages of the present invention will become more apparent by describing in detail a preferred embodiment thereof with reference to the attached drawings in which:

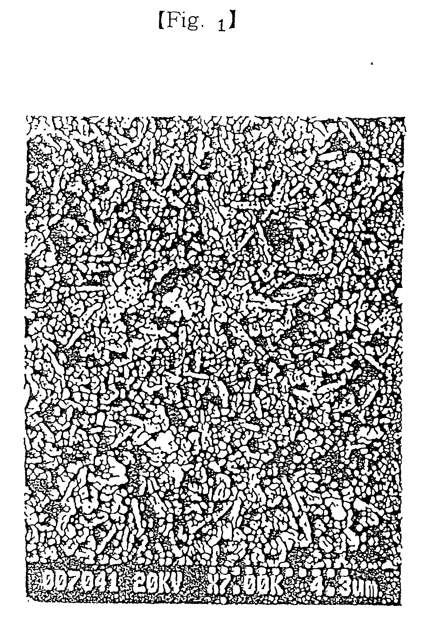

FIG. 1 shows crystalline structure of jade powder used in the present invention by Scanning Electron Microscope (SEM);
FIG. 2 is a graph illustrating far infrared radiation rates of nephrite jade used in the present invention, measured by an FT-IR spectrometer;
FIGS. 3A and 3B typical chromatograms of a standard solution (A) used in the present invention and a cryptocrystalline tremolite microstructure sample (B);
FIG. 4 shows the structure of a probed cryptocrystalline tremolite microstructure in the striatum used in the present invention (above) and in the nucleus accumbens (below);
FIG. 5 is a graph illustrating the effect of a nephrite jade distilled solution (extractant) on dopamine release response to methamphethamine in the striatum used in the present invention; and
FIG. 6 is a graph illustrating the effect of a nephrite jade extractant on dopamine release response to nicotine in the striatum used in the present invention;
FIG. 7 is a graph illustrating the change in the activity of control group (rats) after drinking jade water used in the present invention;
FIGS. 8A and 8B are SEM photographs of silk not treated with jade water used in the present invention;
FIGS. 8C and 8D are SEM photographs of silk not treated with jade water used in the present invention;
FIG. 9 is a graph showing the volume change of the whole culture medium for culturing Digitalis lanata;
FIG. 10 is a graph showing the change of the cell volume of Digitalis lanata;
FIG. 11 is a graph showing the change of the weight of the biological organisms of the cell;
FIG. 12 is a graph showing the change of the dry weight of the cells;
FIG. 13 is a graph showing the change of pH in the culture medium for Digitalis lanata;
FIG. 14 is a graph showing the change of pH of the culture medium after adding nephrite jade powder;
FIG. 15 shows the condition of the analytical instrument;
FIG. 16 shows the output of the results of the analysis;
FIG. 17 shows the change of pH of jade necklace and jade ore in ordinary piped water;
FIG. 18 shows the change of pH of jade necklace and jade ore in underground water according to the passage of time;
FIG. 19 shows the change of pH of strong acid solution treated with jade powder used in the present invention; and
FIG. 20 shows the change of pH of strong acid solution stored in a milk bottle containing jade powder used in the present invention and in a plain milk bottle according to the passage of time.

### DESCRIPTION OF THE PREFERRED EMBODIMENTS

Preferred embodiments of a matrix containing nephrite jade powder as a main component according to the present invention and a preparation method thereof will now be described in detail.

### <EXAMPLE 1>

A sample containing 4.5 % by weight of nephrite jade powder, 1 % by weight of silicone powder and 0.5 % by weight of talcum powder, having the particle size of 360 mesh was added to raw material resin for forming molded products, heated to 135-145°C, and molded by a general molding process, thereby obtaining a matrix as a compound. The obtained matrix was injected into an injection mold through the hopper and heated to 100-130°C to press into the mold with increasing ductility. The molded articles of various types (a variety of vessels such as tableware, personal ornaments such as necklaces, bracelets or rings, sheets and other ornaments) were obtained by being separated from the mold due to opening of the mold.

### <.EXAMPLE 2>

A matrix was obtained in the same manner as in Example 1, except that the particle size of a sample for raw material resin for forming molded articles was 1000 mesh and the compositions of the sample were 1 % by weight of nephrite jade powder, 3 % by weight of silicone powder and 1 % by weight of talcum powder. The thus-obtained matrix was processed by the same method as in Example 1 to obtain molded articles of various types (a variety of vessels such as tableware, personal ornaments such as necklaces, bracelets or rings, sheets or other ornaments).

### <Experimental Example 1>

The experimental examples shown in the following Tables 1 through 4 are to investigate the effect of nephrite jade powder contained in the matrix according to the present invention and the effect of the nephrite jade powder on the living body.

**TABLE 1**

| <Test for Lead Content> | |
|---|---|
| Sample | Jade powder |
| Appearance | White powder |
| Working No. | Research institute attached to FDA of USA IW 091394-1 |
| Experimental method | Atomic Absorption Analysis |
| Results | Not detected |

**TABLE 2**

| <Test for Heavy Metals (including Pb)> | |
|---|---|
| Sample | Jade powder |
| Appearance | White |
| Working No. | IW 080894-4 |
| Experimental method | USP 23 |
| Results | Not detected |

**TABLE 3**

| <Test for Dissociation of Inorganic materials> | |
|---|---|
| Sample | Jade powder |
| Appearance | White |
| Working No. | IW 080894-4 |
| Experimental method | Listed below |
| Results | Listed below |

The sample (100 g) was extracted with 1 liter of water in an autoclave, and the extract was analyzed.

**Table 4**

| Analyzed Material | Result (ppm) | Detection limit (ppm) |
|---|---|---|
| As | ND | 0.05 |
| Ba | ND | 0.20 |
| Cd | 0.006 | 0.005 |
| Cl | ND | 1 |
| Cr | ND | 0.01 |
| Cu | ND | 0.05 |
| Fe | ND | 0.10 |
| Pb | ND | 0.05 |
| Mn | ND | 0.02 |
| Hg | ND | 0.0005 |
| NO₃ | ND | 0.1 |
| Se | ND | 0.05 |
| Ag | ND | 0.01 |
| SO₄ | 1.85 | 1 |
| Zn | ND | 0.01 |
| (ND=Not detected, or the concentration lower than the detection limit) | | |

As shown in the above experimental result, since the nephrite jade powder used in the present invention does not contain any material having toxicity to human body, such as lead, heavy metals or other materials, the articles prepared in the present invention are proved to be safe when they are used as tableware, nipples for feeding bottles or the like.

### <Experimental Example 2>

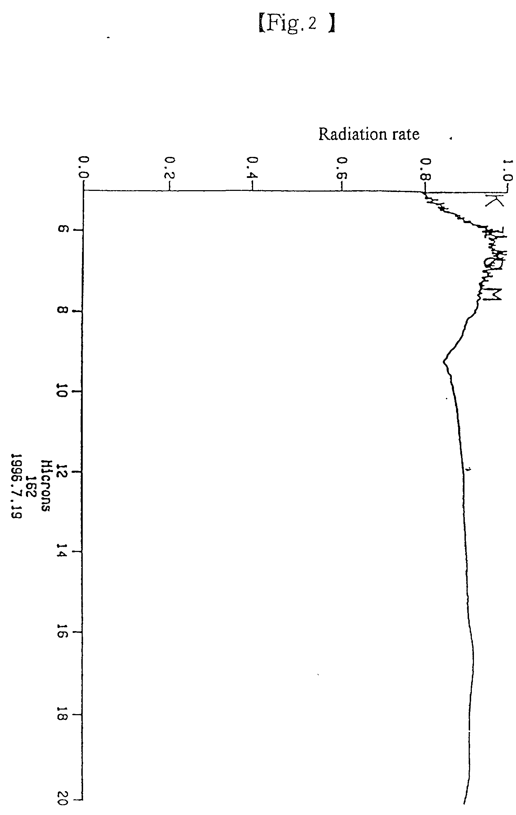

The IR study of nephrite jade powder was performed in this experiment (FIG. 2).

**Table 5**

| | |
|---|---|
| Sample | Nephrite jade powder |
| Appearance | White |
| Experimental method | Perkin Elmer 137 |
| Results | Described below |

IR condition:
Phase: Tetrahydrofuran liquefied thin film
Results: The IR spectrum appears to conform to polycarbonate resin patterns, and to emit the electromagnetic wave having 6-52 µ of wavelength.

### <Experimental Example 3>

The COD (Chemical Oxygen Demand) and BOD (Biochemical Oxygen Demand) of the jade powder used in this experimental example were tested as shown in the following Tables 6 and 7.

**Table 6**

| | |
|---|---|
| Sample | Jade powder |
| Appearance | White |
| Experimental method | Standard methods |
| Results | Described below |

**Table 7**

| | Water (Control) | Jade-treated |
|---|---|---|
| BOD for 5 days | 224 mg/l | 223 mg/l |
| COD | 115 mg/l | 110 mg/l |

This is to examine the physical values of a molded article (a kind of vessels) prepared by the matrix obtained in Examples 1 and 2 based on the proved results by the above-described examples, and those of conventional resin products. The results are listed in Tables 8 and 9.

**Table 8**

| | Article of present invention | Conventional article (1) | Conventional article (2) |
|---|---|---|---|
| Hardness (Shore A) 250°C, 24 Hr | 80 | 45 | 60 |
| Tensile strength (kg/cm2) 250°C, 24 Hr | 120 | 86 | 70 |
| Expandability (%) 250°C, 24 Hr | 350 | 340 | 200 |

**Table 9**

| | | Article of present invention | Conventional article (1) | Conventional article (2) |
|---|---|---|---|---|
| Thermal change rate (%) 250°C, 24 Hr | Tensile strength | -1.1 | -9.2 | -8.2 |
| | Expandability | - 1.0 | -4.0 | 70 |
| | Hardness | 1.7 | 10.0 | 15.0 |

As confirmed from the above results, the article prepared by the present invention was better than conventional resin articles in view of heat resistance and physical strength.

The experimental examples 4 and 5 are presented for demonstrating medical effects of various products containing nephrite jade powder used in the present invention.

### <Experimental Example 4>

To examine advantageous effects of various products of personal ornaments containing nephrite jade powder prepared by the experimental examples 1 and 2 of the present invention, e.g., necklaces, rings, bracelets, the experiment was performed by the Chinese Medical Center affiliated to Daejeon University.

To over 45-year old male and female adults wearing plain ornaments, ornaments prepared according to the present invention had been taken for over 2 hours, and changes in the body condition of examinees were examined, and the results are listed in the following Tables 10 through 12.

**Table 10**

| <Test for 45 year old male adults> | | | |
|---|---|---|---|
| | | Plain ornaments | Nephrite jade containing ornaments |
| HR (SaO2) | | 81 BPM | 76 BPM |
| NIBP | Systole | 127 mmHg | 128 mmHg |
| | Mean | 107 mmHg | 104 mmHg |
| | Diastole | 80 mmHg | 76 mmHg |
| Oxygen concentration (SaO₂) | | 91% | 93% |
| Pulse | | 81 BPM | 76 BPM |

**Table 11**

| <Test for 55 year old male adults> | | | |
|---|---|---|---|
| | | Plain ornaments | Nephrite jade containing ornaments |
| HR (SaO2) | | 81 BPM | 85 BPM |
| NIBP | Systole | 181 mmHg | 173 mmHg |
| | Mean | 142 mmHg | 127 mmHg |
| | Diastole | 111 mmHg | 110 mmHg |
| Oxygen concentration (SaO₂) | | 95% | 95% |
| Pulse | | 83 BPM | 85 BPM |

**Table 12**

| <Test for 64 year old female adults> | | | |
|---|---|---|---|
| | | Plain ornaments | Nephrite jade containing ornaments |
| HR (SaO2) | | 68 BPM | 68 BPM |
| NIBP | Systole | 185 mmHg | 176 mmHg |
| | Mean | 117 mmHg | 125 mmHg |
| | Diastole | 104 mmHg | 105 mmHg |
| Oxygen concentration (SaO₂) | | 74% | 96% |
| Pulse | | 68 BPM | 68 BPM |

As can be seen from the results shown in Tables 10 through 12, the oxygen concentration was higher in those having worn the ornaments made by the articles of the present invention than in those having worn the plain ornaments. Thus, the ornaments of the present invention have excellent effects of promoting metabolism and smooth blood circulation.

### <Experimental Example 5>

Clinical tests were performed on patients having several symptoms, with the patients being let to use the bed, room, sofa, chair and the like sheeted with a cloth cover made of nephrite jade used in the present invention. The clinical test results proved that 88% of the patients had symptom reducing effects.

### ⓞ Criterion and method of selecting examinees

Among people having been treated in the Chinese Medical Center affiliated to Daejeon University, 25 patients suffering from headache, insomnia, dizziness, uneasiness or numbness of hands or feet were selected for clinical tests.

### ⓞ Observation attributes and method

Patients having symptoms of headache, insomnia, dizziness, uneasiness or numbness of hands or feet were allowed to keep the ornaments for a predetermined period (over 10 days), and then the patients' physical conditions and changes were observed.

### ⓞ Evaluation criterion and method

A. Evaluation criterion: Conditions at the first medical examination for observation attributes
B. Evaluation method: Described in Table 13 below. The results are shown in Table 14 below.

**Table 13**

| Order | Effect | Evaluation (%) |
|---|---|---|
| 1 | Negligible or no effect | < 70% |
| 2 | Effective | ≥ 70% |
| 3 | Considerable effect | ≥ 80% |
| 4 | Almost perfect cure | ≥ 90% |

**Table 14**

| Symptom | No effect | Effective | Considerable effect | Almost perfect cure | Total |
|---|---|---|---|---|---|
| | <70% | ≥ 70% | ≥ 80% | ≥ 90% | |
| Headache or dizziness | 2 | 3 | 5 | 1 | 11 |
| Insomnia | 0 | 2 | 1 | 1 | 4 |
| Uneasiness | 1 | 1 | 1 | 2 | 5 |
| Numbness of hands or feet | 0 | 1 | 1 | 1 | 3 |
| Indigestion | 0 | 0 | 2 | 0 | 2 |
| Total | 3 (12%) | 7 (28%) | 10 (40%) | 5 (20%) | 25 (100%) |

As can be shown in the above results of Table 14, most of the patients assigned to the clinical tests had gotten better from the symptoms of headache, dizziness, insomnia, uneasiness, numbness of hands or feet, indigestion or the like. These results fully prove the excellent medical effects of nephrite jade.

### <Experimental Example 6>

The experiment is to examine a change in the bio-rhythm measured by a radionic biofield analyzer, commercially under the name of OMNI-SENSE, when healthy 39 year old male adults and 19 year old female adults were assigned to each test in which necklaces with large beads made of nephrite jade from a nephrite jade mine located in Chuncheon, Korea, and nephrite jade tea were taken and four typical cases were analyzed. The test results are described in Tables 15 and 16.

**Table 15**

| <Jade necklace (with large beads) > | | | | |
|---|---|---|---|---|
| | Male (40 years old) | | Female (19 year old) | |
| | Before treatment | After treatment | Before treatment | After treatment |
| Stenocardia (52071) | 21 | 43 | 43 | 45 |
| Diabetes (11009) | 32 | 35 | 37 | 54 |
| Hypertension (40520) | 31 | 44 | 45 | 44 |
| Sciatica (40228) | 12 | 24 | 53 | 54 |
| * Numbers in parentheses denote intrinsic measurement codes of radionic biofield analyzer (OMNI-SENSE). | | | | |

**Table 16**

| <Jade tea> | | | | |
|---|---|---|---|---|
| | Male (39 years old) | | Female (21 year old) | |
| | Before treatment | After treatment | Before treatment | After treatment |
| Stenocardia (52071) | 53 | 64 | 35 | 44 |
| Diabetes (11009) | 47 | 53 | 42 | 43 |
| Hypertension (40520) | 48 | 57 | 33 | 41 |
| Sciatica (40228) | 43 | 61 | 23 | 52 |

As can be shown in the above results, there is a great difference in the measured values before and after treatment with jade. A higher value means that the jade components are more useful to the human body. Although the above-described experimental example was performed on healthy adults, a greater difference in the measured value is expected to observed in case of patients. The radionic biofield analyzer used in this experiment is a combined analyzer of a traditional analog radionic biofield analyzer and a digital radionic biofield analyzer. A 64 Kbytes pocket com is employed to the radio biofield analyzer used in this experiment. Rates of about 400 basic items for determining the physical conditions of the human body, including balance of Yin and Yang, hormone balance, metabolic problem, deficiency of vitamins, deficiency of minerals, senses and the like, are programmed in the pocket com.

The reference values of the radionic biofield analyzer and measurement conditions thereof are summarized below.

**Table 17**

| <Reference values of radionic biofield analyzer> | |
|---|---|
| 0-25% | Poor |
| 25-45% | Good |
| 45-55% | Very good |
| 55-75% | Good |
| 75-100% | Poor |

Error tolerance: ± 5% allowed according to surrounding factor of measurement place and analyzing person's physical condition
Measurement range: -100 - +100%, normally in the range of 0-100%
Measurement surroundings: EMI free place, optimally a place where no interference from other strong waves occurs
Power: Compatible for both 220 V AC adapter and built-in batteries (A4× 4)

### <Experimental Example 7>

This experiment was performed by the division of Nuclear Medicine, Samsung Medical Center affiliated to Sungkyunkwan University School of Medicine, Seoul, Korea, to investigate the effect of the nephrite jade distilled solution acquired by using the nephrite jade used in the present invention, that is, a jade extractant, on the cerebration, based on the results proved from the above-described experimental examples. The experimental methods and results are as follows.

### A. Preparation of sample

A sample (nephrite jade distilled solution) was prepared by mixing nephrite jade ore pre-processed by pulverizing, sorting and cleaning, and distilled water prepared at an evaporator in a mixture ratio of 1:4, heating the mixture at a high temperature of 100° C or higher, vaporizing components eluted from the jade ores into the distilled water while being boiled, with the distilled water, to then convert the vapor into a distilled solution through heat exchange.

### B. Effect of jade extractant according to the present invention on dopamine release response to methamphetamine

### 1) Experimental animals

Internal microdialysis experiments were carried out using male Sprague-Dawley mellitus rats (280-320 g, Korea Experimental Animal Center). The animals were placed in chambers under 12:12 light/dark conditions, with free access to food and water.

### 2) Internal microdialysis experiment

### a) Treatment by medicine

To investigate the effect of a jade extractant on the dopamine release response to Methamphetamine, 0.5 ml of jade extractant according to the present invention was intraperitoneally injected 60 minutes before intraperitoneal injection of methamphetamine (10 mg/kg, i.p.), and then dialysate samples were collected from the striatum.

### b) Administration and microdialysis

The experimental animals were anesthetized with pentobarbital (50 mg/kg, i.p.), and then a guide cannula was inserted into the striatum (Sterotaxic coordinates: AP, 1.0 and L, 3.2 with respect to bregma, H, 3.0 with respect to dura mater) in a non-invasive manner by the atlas of Paxinos & Watson (1986) and fixed using a microthread and dental cement. After a 24-hour recovery period, a 4 mm vertical microdialysis probe (CMA-12, Carnegie-Medicine, Stockholm, Sweden) was inserted through the guide cannula. The inlet of the microdialysis probe is connected to a syringe mounted on a flow pump via a dual liquid rotary ring. While delivering artificial cerebrospinal fluid containing 145 mM NaCl, 2.7 mM KCl, 1.2 mM CaCl₂, 1.0 mM MgCl₂, 2.0 mM Na₂HPO₄, pH 7.4, at a flow rate of 1.5 µ l/min, through the microdialysis probe, dialysates were collected at 20 minute intervals using a microfraction collector provided by Carnegie-Medicine connected to the outlet of the microdialysis probe. The microdialysis experiment was carried out on experimental animals that were allowed to move freely.

### c) Analysis of microdialysate samples

Monoamines and metabolites of microdialysate samples were assayed by a HLPC-electrochemical detection (ECD) system. The dialysate (30 µ l dose) was separated using a reverse-phase Waters Nova-Pak C-18 column (4µ m, 150 times 3.9 mm). The mobile phase consisted of 75 mM sodium phosphate, 0.12 mM EDTA, 1.4 mM octansulfonic acid and 10% acetonitrile. It was adjusted with phosphoric acid to pH 3.2. The HPCL peak was analyzed using an ESA coulochem II 5200A Electrochemical detector with a high-performance analysis device (ESA model 5014). The potential of a working electrode was set to +320 mV. The flow rate of the system was 1.0 ml/min.

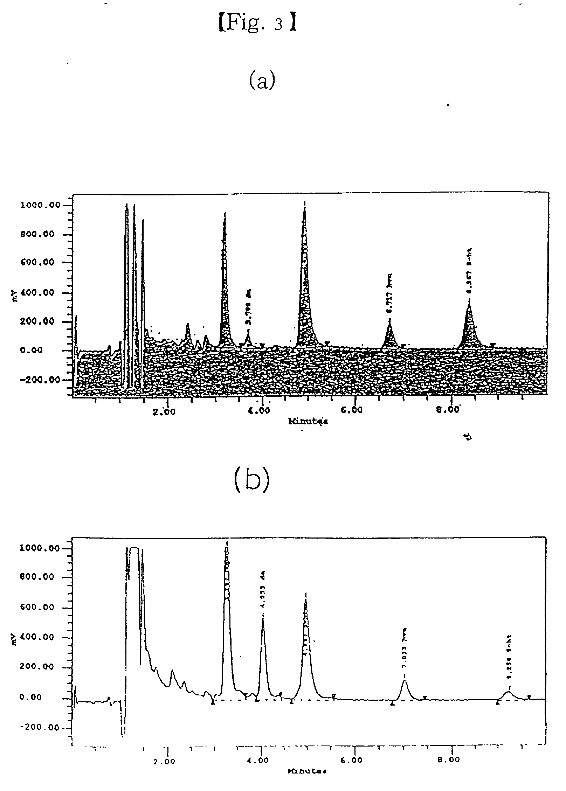

Typical chromatograms obtained from the standard solution and microdialysate samples are shown in FIG. 3. Dopamine, dihydroxyphenylacetic acid (DOPAC), homovanillic acid (HVA), 5-hydroxytrymptamine (5-HT), 5-hydroxyindoleacetic acid (5-HIAA) were distinctly separated. The dopamine concentration of the dialysate was more than 3 times of the minimum measurement limit, i.e., 116 pM. The baseline concentrations of dopamine, DOPAC, HVA, 5-HT and 5-HIAA were 18.5 nM, 90.5 nM, 74.7 nM, 6.2 nM and 45.6 nM, respectively. Since the dopamine recovery rate of the microdialysis probe, obtained by external experimentation, was 20%, the extracellular dopamine level was estimated to 92.5 nM. The dopamine level of the microdialysis probe was expressed as a percent of baseline of the average dopamine concentrations of last three samples collected immediately before experimental treatment.

### d) Histological identification

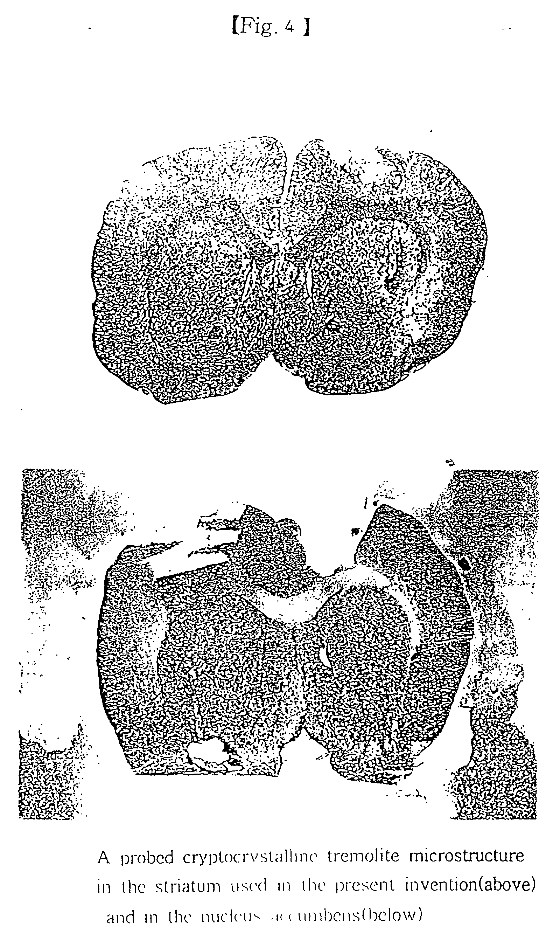

Upon completion of experiments, the experimental animals were anesthetized by an overdose of pentobarbital, and then decerebrated by infusion of a physiological saline solution and a 10% formalin solution. The removed brains were stored in a 10% formalin solution for at least 2 weeks. Then, tissues of a section where the microdialysis probe is positioned are cut to a thickness of 50 µ m , and their exact positions were identified by hematoxylin staining (see FIG. 4).

### e) Statistical analysis

All measured values were expressed as meant S.E. The statistical significance of data was analyzed using multiple analysis of variance (drug × time) and Bonferroni method. StarView 4.02 (Abacus Concepts, Inc., Berkely, CA, U.S.A.) as a statistics analysis software and Macintosh computers were employed. The statistical significance was determined based on the P level of 0.005.

### 3) Research results

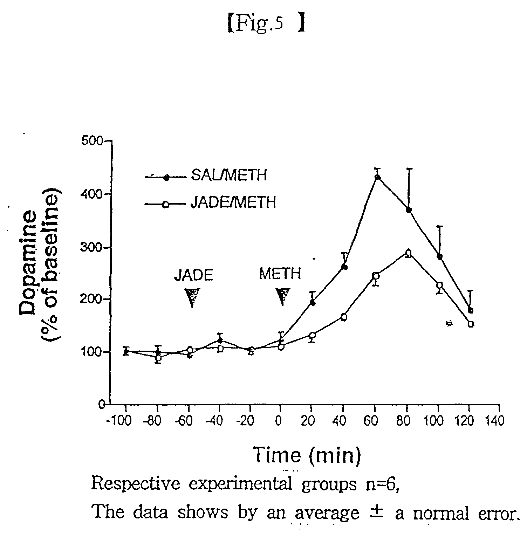

FIG. 5 shows the effect of a jade extractant (distilled solution) on dopamine release response to methamphetamine in the striatum. After injection of methamphetamine (10 mg/kg, i p.), the extracellular concentration of dopamine gradually increased to reach a peak in 60 minutes (433.6± 14.3% of baseline). When 0.5 ml of jade extractant was intraperitoneally injected 60 minutes prior to methamphetamine infusion, an increase in the extracellular concentration of dopamine in the striatum decreased upto 32.8% responsive to methamphetamine (29.15± 11.4% of baseline). Also, the injection of jade extractant retarded a time required to reach the maximum level of dopamine after infusion of methamphetamine. The jade extractant according to the present invention did not affect the extracellular concentration of dopamine in the stable striatum.

### C. Effect of jade extractant according to the present invention on dopamine release response to nicotine

### 1) Experimental animals

Internal microdialysis experiments were carried out using male Sprague-Dawley mellitus rats (280-320 g, Korea Experimental Animal Center). The animals were placed in chambers under 12:12 light/dark conditions, with free access to food and water.

### 2) Internal microdialysis experiment

### a) Treatment by medicine

To investigate the effect of a jade extractant on the dopamine release response to nicotine, 0.5 ml of jade extractant according to the present invention was intraperitoneally injected 60 minutes before infusion of nicotine (0.4 mg/kg, hyperdermic injection), and then dialysate samples were collected from the striatum.

### b) Administration and microdialysis

The experimental animals were anesthetized with pentobarbital (50 mg/kg, i.p.), and then a guide cannula was inserted into the striatum (Sterotaxic coordinates: AP, 1.0 and L, 3.2 with respect to bregma, H, 3.0 with respect to dura mater) in a non-invasive manner by the atlas of Paxinos & Watson (1986) and fixed using a microthread and dental cement. After a 24-hour recovery period, a 4 mm vertical microdialysis probe (CMA-12, Carnegie-Medicine, Stockholm, Sweden) was inserted through the guide cannula. The inlet of the microdialysis probe is connected to a syringe mounted on a flow pump via a dual liquid rotary ring. While delivering artificial cerebrospinal fluid containing 145 mM NaCl, 2.7 mM KCI, 1.2 mM CaCl₂, 1.0 mM MgCl₂, 2.0 mM Na₂HPO₄, pH 7.4, at a flow rate of 1.5 µ l/min, through the microdialysis probe, dialysates were collected at 20 minute intervals using a microfraction collector provided by Carnegie-Medicine connected to the outlet of the microdialysis probe. The microdialysis experiment was carried out on experimental animals allowed to freely move.

### c) Analysis of microdialysate samples

The concentrations of microdialysate samples were assayed by a HLPC-electrochemical detection (ECD) system. The dialysate (30 µ l dose) was separated using a reverse-phase Waters Nova-Pak C-18 column (4µ m, 150 times 3.9 mm). The mobile phase consisted of 75 mM sodium phosphate, 0.1 mM EDTA, 1.4 mM octansulfonic acid and 10% acetonitrile. It was adjusted with phosphoric acid to pH 3.2. The HPCL peak was analyzed using an ESA coulochem II 5200A Electrochemical detector with a high-performance analysis device (ESA model 5014). The potential of a working electrode was set to +320 mV. The flow rate of the system was 1.0 ml/min. The dopamine concentration of the dialysate was expressed as a percent of baseline of the average dopamine concentrations of last three samples collected immediately before experimental treatment.

### d) Histological identification

Upon completion of experiments, the experimental animals were anesthetized by an overdose of pentobarbital, and then decerebrated by infusion of a physiological saline solution and a 10% formalin solution. The removed brains were stored in a 10% formalin solution for at least 2 weeks. Then, tissues of a section where the microdialysis probe is positioned are cut to a thickness of 50 µ m , and their exact positions were identified by hematoxylin staining.

### e) Statistical analysis

All measured values were expressed as meant S.E. The statistical significance of data was analyzed using multiple analysis of variance (drug × time) and Bonferroni method. The statistical significance was determined based on the P level of 0.005.

### 3) Research results

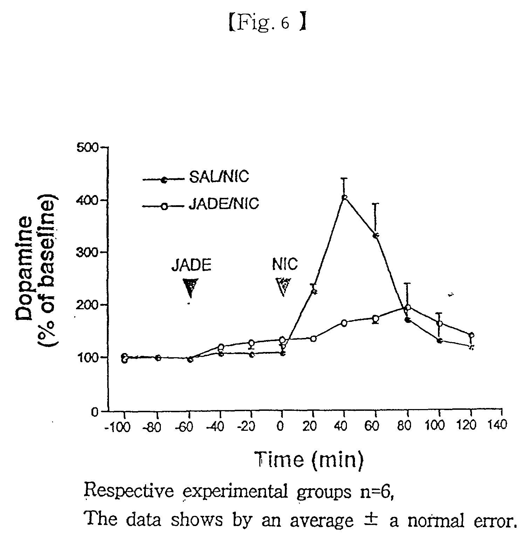

FIG. 6 shows the effect of jade extractant (distilled solution) on dopamine release response to nicotine in the striatum. After infusion of nicotine (0.4 mg/kg, hypodermic injection), the extracellular concentration of dopamine gradually increased to reach a peak in 40 minutes (403.9± 33.2% of baseline), and then decreased to be restored to the baseline level in 120 minutes. When 0.5 ml of jade extractant was intraperitoneally injected 60 minutes prior to nicotine infusion, an increase in the extracellular dopamine concentration in the striatum decreased upto 52.0% responsive to nicotine (193.9± 6.1% of baseline). Also, the injection of jade extractant retarded a time required to reach the maximum level of dopamine after infusion of nicotine (80 minutes after injection of nicotine). The jade extractant according to the present invention did not affect the concentration of extracellular dopamine in the stable striatum.

As described above, the experimental results showed that the jade extractant according to the present invention suppressed dopamine release due to methamphetamine and nicotine in the striatum of mellitus rats.

### < Experimental Examples 8-9>

The experiment is to investigate the effects of jade extractant of the present invention, jade containing space and supernatant jade water after precipitation of jade powder, on the reproduction and growth in mellitus rats. The experiment was performed by Korea Food Research Institute. The details are described below.

### <Experimental Example 8>

To examine the relieving effect of nephrite jade on the symptoms of streptozotocin-induced diabetic mellitus rats, the experiment was performed by the Korea Food Research Institute. The details are described below.

To thirty-two (32) Sprague Dawley rats weighing 252-292 g were given streptozotocin (35-40 mg dissolved in 0.1M citrate buffer of pH 4.0) intraperitoneally to induce diabetes. Seven days after administration of streptozotocin, rats showing blood glucose level higher than 250 mg/dl were selected based on uropaper (Eiken Chemical Co., Ltd., Japan). Four experimental groups of 5 rats each were employed for 50 days of experimental period. Group A rats were injected with 1.0 ml of distilled jade water (pH 6.40) intraperitoneally each day. Rats of group B were housed in cages placed with jade products on the bottom throughout the experiment. Rats of group C were fed with supernatant jade water after precipitation of jade powder out as a drinking water everyday. Group D rats as a control were injected with streptozotocin only. Diets fed were commercial rat chow, and the rats were cared according to the general practices. Rats were sacrificed on day 50 and blood was collected from abdominal aorta. Plasma was prepared from centrifuging blood containing heparin at 5,000 rpm for 15 min after leaving blood at room temperature for 30 min. Organs (liver, kidney) taken out were weighed and recorded. Measurements tested in blood plasma were HBA (plasma β -hydrroxybutyrate), FFA (free fatty acids), cholesterol, HDL-cholesterol and triglyceride. The content of HBA is quantitatively analyzed by measuring the increase of Absorbance (OD) of NADH, which is produced by oxidation by β -hydrroxybutyrate dehydrogenase, at 340 nm. Lipids in blood were measured by using a clinical kit (Eiken Chemical Co., Ltd., Japan).

**Table 18**

| <Effects of Jade on the Body and Organ Weight Changes in Streptozotocin-Induced Diabetic Rats> | | | | |
|---|---|---|---|---|
| Group | Body weight (g) | | Organ weight (g/100 g body wt.) | |
| | Beginning | Ending | Liver | Kidney |
| A | 270.4± 11.3 | 271.7± 49.4 | 4.31± 0.33 | 1.02± 0.12 |
| B | 284.8± 6.1 | 279.6± 20.4 | 4.30± 0.64 | 1.01± 0.18 |
| C | 280.4± 13.2 | 315.7± 41.1 | 3.96± 0.75 | 0.87± 0.14 |
| D | 257.2± 4.2 | 194.8± 26.3 | 4.37± 0.19 | 0.78± 0.04 |

**Table 19**

| <Effects of Jade on the Changes of Biochemical Indices in Streptozotocin-Induced Diabetic Rats> | | | | | | |
|---|---|---|---|---|---|---|
| Group | Glucose (mg/100 ml) | HBA^{a} (µ mol/ml) | FFA^{b} (µ eq/ml) | TC^{c} (µ mol/ml) | TG^{d} (mg/100 ml) | HDL^{e} (mg/100 ml) |
| A | 639.2± 99.0^{a} | 0.782± 0.481^{a} | 507.6± 226.6^{a} | 166.2± 69.4 | 410.7± 50.1 | 32.35± 5.94 |
| B | 495.1± 228.1^{a}^{b} | 0.527± 0.296^{a}^{b} | 349.5± 79.2^{a}^{b} | 161.3± 45.3 | 122.5± 43.5 | 29.49± 1.71 |
| C | 354.1± 154.2^{b}^{c} | 0.425± 0.172^{a}^{b} | 287.3± 71.7^{b} | 145.4± 29.1 | 87.9± 29.2 | 30.55± 8.28 |
| D | 196.8± 16.3^{a} | 0.276± 0.036^{b} | 291.0± 131.2^{b} | 158.2± 12.2 | 86.8± 3.4 | 31.37± 3.84 |
| p < 0.05 | | | | | | |

| | | | | | | |
|---|---|---|---|---|---|---|
| ^{a}β -hydrroxybutyrate (ketone body) | | | | | | |
| ^{b}Free fatty acid | | | | | | |
| ^{c}Total-cholesterol | | | | | | |
| ^{d}Triglyceride (neutral lipid) | | | | | | |
| ^{e}High-density lipoprotein cholesterol | | | | | | |

In terms of body weight, group C rats fed with jade water had shown higher body weight than other groups, of which the body weight was reduced (B, D) or maintained (A) at the end of the experiment. Kidney weights are generally increased in DM patients, and this tendency was also increased too, but liver weight was the lowest in rats fed with jade water. Concentrations of blood glucose, ketone body and FFA were higher in the order of groups A, B, C and D. Blood plasma cholesterol and triglyceride concentration had followed the same tendency (A>B>C>D) to the above parameters mentioned. From the result, rats fed with jade water (group C) showed comparatively lower values of all the parameters measured rather than the other two experimental groups, and blood cholesterol and FFA concentrations were lower in the group C rats than in the control group rats without any jade treatment. TC and TG concentration was in the order of A>B>C>D. The result of glycemic index by blood sugar reaction after meal alters dependent upon the researchers. However, in the experiment, though commercial blended feed (TMR) was fed without considering glycemic index of cereals, the group C rats fed with jade water showed an effect for alleviating hyperlipidemia, one of diabetic symptoms. There occurred no difference of HDL-cholesterol concentration between the test groups. The administration of vapor-phase nephrite jade material and nephrite jade distilled solution to Streptozotocin-induced diabetic rats showed effects of preventing the reduction of body weight, preventing enlargement of kidney or liver as well as alleviating hyperlipidemia, one of diabetic symptoms.

### <Experimental Example 9>

Thirty male and female Sprague Dawley rats (9 week old) were assigned to each treatment. Rats of group A were housed in the cages into which the air containing vapor-phase nephrite jade and provided with tap water. Rats of group B were fed with supernatant jade water after precipitation of jade powder (2 mg/ml tap water), but no vapor-phase nephrite jade was injected into the case. The rats of group C formed as a control group (no vapor-phase nephrite jade and no jade water). Rates were mated for nine days and then male rats separated and sacrificed for sperm concentration and motility tests. The results are shown in the following Table 20.

**Table 20**

| <Effect of Jade Products on the Reproduction and Growth of Rats> | | | |
|---|---|---|---|
| Group | A | B | C |
| Parturition (No. of rats) | 9 | 9 | 9 |
| Litter size (♂/♀) | 96(57/39) | 94 (57/37) | 102(54/48) |
| Litter size (head/♀ rat) | 11.8± 1.9 | 10.9± 1.4 | 12.8± 2.1 |
| Body weight at birth (g) | 4.73± 1.10 | 5.79± 0.95 | 5.35± 0.35 |
| Mortality (No. of head) | 4 | 4 | 3 |
| Days from mating to parturition | 23.8± 1.4 | 25.1± 1.7 | 25.5± 3.7 |
| Body weight at weaning (g) | 43.45± 8.04 | 42.73± 8.76 | 42.07± 10.71 |
| Body weight at slaughter (g) | 294.0± 10.9 | 274.4± 8.6 | 288.4± 26.7 |
| Testis weight (g) | 3.90± 0.21 | 3.57± 0.30 | 3.99± 0.15 |
| Sperm concentration (10⁸/ml) | 6.32± 2.4 | 4.80± 1.3 | 4.60± 1.9 |
| Sperm motility (%) | 91.0± 4.2 | 92.0± 2.7 | 88.0± 7.6 |

From the findings, jade products and jade water treatments had shown better parturition records. Parturition rates of groups A and B (90%) were higher than those of group C (80%), although rats of group C gave birth to several more puppies. Also, a length of time from mating to parturition was shorter in group A rats than the other two group rats. Besides these findings, sperm concentration and motility in both rats of group A and B were superior to group C. However, the effects of both jade products and jade water treatments at the same time were not investigated in this study. In conclusion, the results suggest that jade products and jade water seem to affect the reproduction and growth. The groups injected with jade product or treated with jade water were superior in reproduction and growth.

### <Experimental Example 10>

This experiment is to examine the change in the activity of rats provided with jade water added with the nephrite-jade powder used in the present invention.

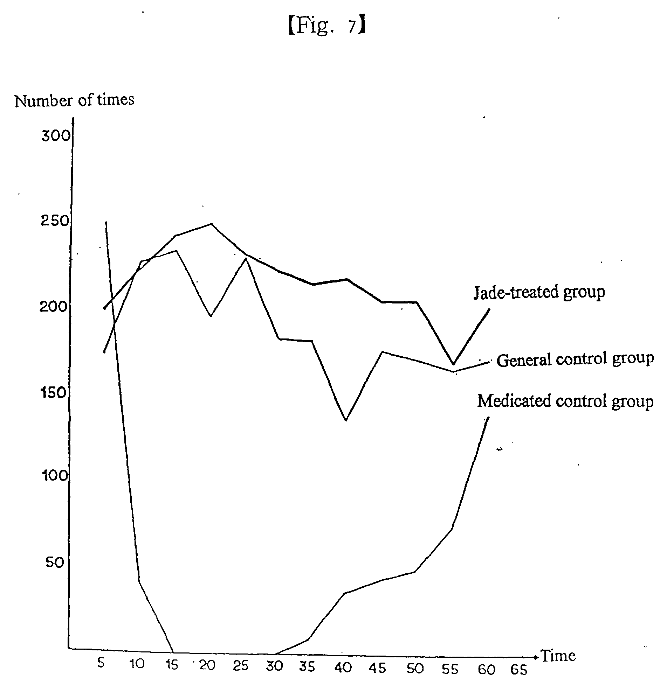

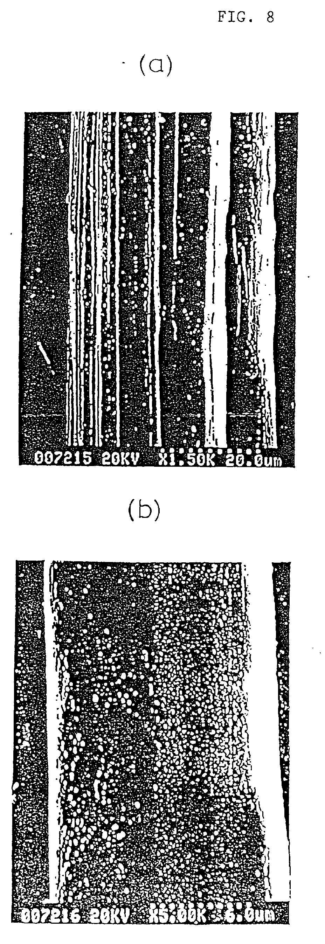

As shown in FIG. 7, in testing the stability characteristic, the mouse in the medicated control group began to show stability in its central nerve in 5 minutes later after having a Chinese medicine and then was completely recovered to the normal state after 30 minutes later. The mouse in the general control group showed an undulating change in its activity rate, showing a decreasing tendency on the whole. The activity rate of the mouse in the jade water drinking group was similar to that of the general control group, showing an average activity rate slightly higher than that of the general control group, and significantly higher than that of the mediated group.

### <Experimental Example 11>

This experiment is to examine the effects of jade on the growth rate, sperm motility and quantity of muscular motion when the water provided from a purifier formed of nephrite jade used in the present invention, available from Chuncheon, Korea, and the AIN-diet stored in a general refrigerator, are fed to test groups (white rats).

The tests were applied to a control group (A) fed with the water provided from a general purifier and the AIN (American Institute of Nutrition)-diet stored from a general refrigerator, and a jade-treated group (B) fed with the water provided from a jade purifier and the AIN-diet stored in a refrigerator formed of a jade material. 9 white rats (10 week old) for each test group, (3 × 3 repetition), totaling 18 rats, were reared, and the growth rate, sperm motility, sperm concentration, blood lipid concentration and quantity of motion.

**Table 21**

| Measurement attribute | Treated group | |
|---|---|---|
| | Control group (A) | Treated group (B) |
| Growth rate (g/day) | 2.33± 0.37 | 2.64± 0.41 |
| Feed intake (g/day) | 15.52± 1.30 | 14.97± 1.07 |
| Drink quantity (ml/day) | 35.8± 1.1 | 27.8± 0.9 |
| Sperm motility | | |
| Sperm vitality | 90.0± 0.00 | 88.3± 2.9 |
| Sperm concentration | 5.7± 1.37 | 6.9± 1.08 |
| Quantity of motion | | |
| Revolving club | 41.0± 1.6 | 41.5± 9.1 |
| Revolving basket | 18 | 17 |
| Swimming endurance | 10,481± 5,315 | 11,713± 3,519 |
| Blood | | |
| pH | 7.66± 0.10 | 7.84± 0.09 |
| TG | 171.5± 39.2^{a} | 133.1± 33.3^{b} |
| TC | 171.1± 62.3 | 146.6± 62.1 |
| HDL | 82.8± 10.7 | 69.3± 7.4 |

| | | |
|---|---|---|
| ● a: General cage, water from general purifier and AIN-diet stored in general refrigerator | | |
| ● b: Cage with jade-treated tile, water from jade purifier and AIN-diet stored in jade refrigerator ● p<0.05: Statistically significant at 95% level | | |

### <Results>

① Two treated groups showed no difference in the parturition rate and the blood lipid concentration as well as the growth rate.
② While there was no considerable difference in the sperm vitality between two groups, the sperm concentration of the jade treated group was approximately 17% higher than that of the control group.
③ In measurement of the sperm motility, the swimming endurance of the jade treated group was approximately 1,200 seconds, on the average, longer than that of the control group.
④ The blood pH of the jade treated group was rather higher than that of the control group.
⑤ The control group showed a rather higher HDL level in blood lipid than the jade treated group.

As can be shown in the above results, the jade treated group is superior to the control group in swimming endurance and sperm concentration. In particular, the jade treated group showed significantly lower levels of TC and TG than the control group.

### <Experimental Example 12>

As confirmed from Tables 22 and 23, in order to investigate the effects of different kinds of water on the parturition and weaning of test groups (white rats), the tests were assigned to 5-week-old white rats. The drinking water was divided into three groups, that is, underground water (A), water from a general purifier (B) and nephrite jade powder water of the present invention (C). As test feeds, AIN-diet was equally fed to the test groups. Each 9 female white rats (♀) were assigned to test groups, (3× 3 repetition), totaling 27 rats, and each 8 male white rats (♂) were assigned to test groups, totaling 24 rats. After being reared for 4 weeks, the test group rats were mated for 7 days, the mating ratio being ♂ /♀ =1:3. With the passing of 3 weeks of pregnancy, the test group rats were reared from parturition to weaning time.

**Table 22**

| <Effects of different kinds of water on white rats > | | | |
|---|---|---|---|
| Measurement attribute¹⁾ | Treated group | | |
| | A | B | C |
| Increased weight (g/day) | 4.32± 0.26 | 4.20± 0.26 | 4.33± 0.37 |
| Feed intake (g/day) | 16.25± 0.32 | 16.51± 0.45 | 17.01± 1.06 |
| Drink quantity (ml/day) | 20.3± 1.2 | 22.00± 1.8 | 19.8± 1.1 |
| Sperm motility | | | |
| Sperm vitality | 91.1± 2.3 | 90.5± 2.8 | 91.1± 2.8 |
| Sperm concentration (10⁸/ml) | 4.01± 1.09 | 4.26± 0.71 | 4.87± 1.41 |
| Quantity of motion | | | |
| Revolving basket (times, 10 min) | 57.8± 3.16 | 35.2± 19.0 | 33.3± 14.7 |
| Swimming endurance (sec) | 4,082± 813 | 5,087± 1,471 | 5,332± 445 |
| Revolving club (sec) | 39.6± 18.9 | 32.9± 9.9 | 31.5± 11.0 |
| Blood pH | 7.64± 0.09 | 7.69± 0.12 | 7.78± 0.24 |

| | | | |
|---|---|---|---|
| ¹⁾ Measured from male rats ● A: Underground water, B: Water from general purifier, C: Nephrite jade powder water | | | |

**Table 23**

| <Effects of different kinds of water on parturition of white rats> | | | | | |
|---|---|---|---|---|---|
| Treated group¹⁾ | Days from mating to parturition (Days) | Parturition (No. of rats) (Parturition rate, %) | Total No. of pups | No. of pups at a litter | No. of weaned pups (♂ /♀) |
| A | 24.2± 1.5 | 5(55,6) | 56 | 11.2± 1.9 | 53(26/27) |
| B | 25.5± 2.3 | 6(66,7) | 46 | 7.7± 2.9 | 39(17/22) |
| C | 24.7± 2.3 | 7(77,8) | 81 | 11.6± 0.5 | 69 (41/28) |

### <Results>

① There was no significant difference in the growth rate, quantity of motion and sperm motility among treated groups A, B and C.
② The sperm concentration of the treated group C, that is, the group treated with nephrite jade distilled solution of the present invention, was 4.87× 10⁸/ml, 21.4% and 14.3% higher than the other treated groups A and B, that is, 4.01× 10⁸/ml and 4.26× 10⁸/ml.
③ The parturition rates were 55.6%, 66.7% and 77.8% in the underground water, the water from a general purifier and the nephrite jade powder water, respectively, the parturition rate of the jade treated group C being rather higher than other groups.
④ The numbers of puppies at a litter were 11.2± 1.9, 7.7± 2.9 and 11.6± 0.5, in underground water, water from a general purifier and nephrite jade powder water, respectively.
⑤ The numbers of puppies weaned 3 weeks after parturition were 53, 39 and 69 in the treated groups A, B and C, respectively, and the sex (♀ /♂) ratios were 26/27, 17/22 and 41/28, showing that the male pups being more than the female pups in the jade treated C group.

From the findings, the sperm concentrations of the jade treated group were 21.4% and 14.3% higher than those of the other groups, respectively. Also, the parturition rates of the female white rats of the jade treated group, i.e., 78%, were higher than those of the other groups, that is, 56% and 67%, respectively. Further, in the sex ratio of weaned puppies, the male pups of the jade treated group were higher than those of the other groups.

### <Experimental Example 13>

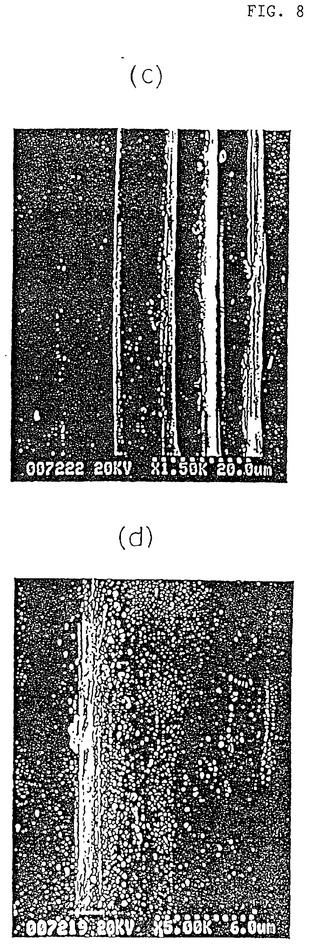

The experiment was performed to investigate the effect of the jade-treated water obtained by purifying piped water using a filter formed by nephrite jade used in the present invention on the growth of silkworm and the quality of the produced silk (see FIG. 8).
① Materials and Methods
   1. Species of silkworm: white gem silkworm
   2. Period of growth: November to December
   3. Method for growth: constant temperature and constant humidity leaves during all instars
   4. No. of silkworms:
      Control group 150 (H2 repetition)
      Treated group 130 (H2 repetition)
   5. Treatment:
      Control group: Mulberry leaves sprayed with distilled water are fed.
      Treated group: Mulberry leaves sprayed with jade-treated water are fed.
      Time to treat the silkworms: starting from 2^{nd} instar

**Table 24**

| <Rearing results performed with the jade powder water treatment> | | | | | | | | |
|---|---|---|---|---|---|---|---|---|
| | Replication | No. of Larvae examined | Larval period of the 5^{th} instar | | Total larval period | | Pupation percentage | |
| | | | Day | Hrs | Day | Hrs | % | Index |
| Control group | 1 | 150 | 7 | 7 | 23 | 7 | 91.3 | 100 |
| | 2 | 150 | 7 | 7 | 23 | 7 | 76.6 | |
| | Mean | 150 | 7 | 7 | 23 | 7 | 84.0 | |
| Treated group | 1 | 130 | 7 | 15 | 23 | 15 | 74.1 | 85 |
| | 2 | 130 | 7 | 15 | 23 | 15 | 68.2 | |
| | Mean | 130 | 7 | 15 | 23 | 15 | 71.3 | |

**Table 25**

| <The performance of cocoon reeling with jade powder treatment> | | | | | | |
|---|---|---|---|---|---|---|
| | Cocoon filament length (m) | Cocoon filament weight (cg) | Silk size (d) | Nonbroken length of Bave (m) | Nonbroken filament weight (cg) | Reelability (%) |
| Control group | 1,222 | 33.7 | 2.48 | 3.47 | 23.4 | 69 |
| Treated group | 1,283 | 36.3 | 2.55 | 1,005 | 28.5 | 78 |

**Table 26**

| <The change of larval weight with jade treatment> | | | | |
|---|---|---|---|---|
| | Weight of newly exuviated larva from the 3^{rd} molting | Weight of newly exuviated larva from the 4^{th} molting | Weight of the 3^{rd} day of the 5^{th} instar | Matured larvae |
| Control group | 0.46 | 1.85 | 20.80 | 47.4 |
| Treated group | 0.47 | 1.94 | 23.03 | 52.2 |

**Table 27**

| <Decreasing effects of blood glucose content by jade solution> | | | | |
|---|---|---|---|---|
| Silk extracts | Blood glucose content | | Decreasing effects of blood glucose | |
| | Injected withN maltose (A) (mg/100 ml) | Injected with silkworm extracts (B) (mg/100 ml) | Amount (C=A!B) (mg/100 ml) | Efficiency |
| Treated with water | 64.0∀1.87 | 27.7∀1.70 | 36.3 | 56.7 |
| Treated with jade solution | 69.6∀1.62 | 20.7∀1.62 | 48.9 | 70.3 |
| N: Before injection of silkworm extracts | | | | |

### <Results>

1. The larva weight of the jade-treated group was higher than that of the control group in every instar. In particular, in case of mature larva, the weight of the jade-treated group was higher by 0.48 g per larva than that of the control group.
2. The pupation percentage of the jade-treated group was 71.2%, which was lower by about 15% than that of the control group. The cocoon yield of the jade-treated group was 15.4 g per 10,000 larvae, which was lower by 7% than that of the control group.
3. The single cocoon weight of the jade-treated group was 2.14 g, which was higher by about 6% than that of the control group. Also, the cocoon shell weight of the jade-treated group was 44.5 cg. The cocoon shell percentage of the jade-treated group was higher by 2% than that of the control group.
4. The reeling performance of the jade-treated group was generally better than that of the control group. In particular, the jade-treated group was excellent in view of the cocoon filament length, cocoon filament weight and reelability (higher by about 9% than that of the control group).
5. In view of silk quality, the neatness point of the jade-treated group was slightly higher than that of the control group. Also, the tenacity, elongation and raw silk percentage of the jade-treated group were higher than those of the control group. However, the cocoon yield of the jade-treated group was lower than that of the control group per 10,000 larvae.
6. No substantial difference in the surface structure between the control group and the jade-treated group was revealed.
7. The crystalline structure of the treated jade was in a rod shape having a sharp tip.

### <Experimental example 14>

The test cup prepared by nephrite jade used in the present invention and the control cup made of polyethylene were filled with homogenized Grade A milk, and allowed to stand for 48 hours at ambient temperature. Then the milk was subjected to analysis. The results are shown in Table 28 below.

**Table 28**

| Tests | Control cup | Test cup |
|---|---|---|
| Coliform Bacteria | Absent/ml | Absent/ml |
| Lactobacillus | 45000 cfu/ml | 37000 cfa/ml |
| Yeast & Mold Count | 310 cfu/ml | 280 cfu/ml |
| Standard Plate Count | Over 3× 10⁶ cfu/ml | Over 3× 10⁶ cfu/ml |

Conclusion: The number of microorganisms which are harmful to human body was reduced.

### <Experimental Example 15>

In this experimental example, tests for the food decomposition rates of synthetic resin rice-bowls made of nephrite jade powder used in the present invention were performed as shown in Table 29.

**Table 29**

| | |
|---|---|
| Sample | Jade bowl |
| Appearance | Milk-white powder |
| Experimental method | Described below |
| Results | Described in Table 30 |

Experimental method: Five jade bowls (test group) and five plain bowl (control group) were filled with a mixture of equal volumes of rice and sterile water and allowed to stand at room temperature for 24 hours. The two groups were spaced approximately 1 meter apart from each other with the lids off to be completely exposed to the air. As shown in Table 30 below, standard plate count tests were performed.

**Table 30**

| | | | |
|---|---|---|---|
| (Unit: cfu/ml) | | | |

| Bowl | Control group | 0 hour | Test group |
|---|---|---|---|
| #1 | 0,0 | | 0,0 |
| #2 | 0,0 | | 0,0 |
| #3 | 0,0 | | 0,0 |
| #4 | 0,0 | | 0,0 |
| #5 | 0,0 | | 0,0 |

| 18 hours | | | |
|---|---|---|---|
| #1 | 721,635 | | 666, 690 |
| #2 | 516,608 | | 522, 620 |
| #3 | 629, 715 | | 570, 620 |
| #4 | 777, 595 | | 707, 724 |
| #5 | 737, 701 | | 731, 678 |

| 24 hours | | | |
|---|---|---|---|
| #1 | 1036, 981 | | 1005, 890 |
| #2 | 1210, 1281 | | 1060, 1095 |
| #3 | 1068, 889 | | 951, 180 |
| #4 | 972, 1050 | | 1002, 971 |
| #5 | 1042, 1160 | | 978, 1149 |

Conclusion: In the decomposition of food in the test group bowls and the control group bowls, the food decomposition rates of the test group bowls were lower than those of the control group bowls, which suggests that the jade of the present invention has advantageous effect on food storage.

### <Experimental Example 16>

The experiment was performed to investigate the effect of jade bowls made of the nephrite jade powder used in the present invention on the freshness of pork. Details are described in Table 31.

**Table 31**

| <Effects of Jade Container on the Parameters Affecting Pork Quality> | | | | | |
|---|---|---|---|---|---|
| Temp (° C) | | 0 | | 4 | |
| Container | | Control Jade | | Control Jade | |
| Day 0 | pH | 5.83± 0.04 | | | |
| | VBN | 3.50± 0.43 | | | |
| | TBA | 0.063± 0.013 | | | |
| | Color (Δ E) | 53.70± 4.34 | | | |
| Day 4 | Drip loss (%) | 0.14 | 0.57 | 0.54 | 0.01 |
| | pH | 5.46± 0.04 | 5.42± 0.00 | 5.59± 0.01 | 5.69± 0.01 |
| | VBN | 5.56± 0.20 | 4.29± 0.20 | 5.56± 0.20 | 5.42± 1.41 |
| | TBA | 0.153± 0.20 | 0.104± 0.20 | 0.122± 0.006 | 0.099± 0.025 |
| | Color (Δ E) | 55.80± 0.01 | 49.30± 0.11 | 54.90± 0.08 | 56.50± 0.07 |
| Day 7 | Drip loss (%) | 1.02 | 0.17 | 1.90 | 0.43 |
| | pH | 5.77± 0.03 | 5.84± 0.01 | 5.56± 0.01 | 5.65± 0.01 |
| | VBN | 2.36± 0.00 | 2.32± 0.00 | 3.48± 0.45 | 2.59± 0.22 |
| | TBA | 0.234± 0.013 | 0.203± 0.006 | 52.80± 0.06 | 52.90± 0.05 |
| | Color (Δ E) | 55.50± 047 | 52.60± 0.75 | 52.80± 0.06 | 52.90± 0.05 |
| Day 14 | Drip loss (%) | 0.92 | 0.27 | 2.70 | 0.19 |
| | pH | 5.50± 0.01 | 5.67± 0.03 | 6.71± 0.00 | 5.91± 0.02 |
| | VBN | 3.00± 0.39 | 3.98± 0.18 | 6.17± 0.87 | 3.85± 0.53 |
| | TBA | 0.162± 0.013 | 0.176± 0.019 | 2.406± 0.191 | 0.811± 0.089 |
| | Color (Δ E) | 51.70± 0.10 | 53.80± 0.13 | 62.80± 0.00 | 56.70± 0.04 |
| Day 21 | Drip loss (%) | 1.11 | 0.35 | 0.85 | 0.25 |
| | pH | 6.41± 0.01 | 6.07± 0.00 | 7.24± 0.00 | 6.69± 0.01 |
| | VBN | 5.32± 0.36 | 7.35± 0.42 | 30.67± 3.31 | 15.08± 0.98 |
| | TBA | 10.220± 0.230 | 6.852± 0.274 | 10.15± 0.198 | 2.298± 0.102 |
| | Color (Δ E) | 52.40± 0.06 | 59.20± 0.13 | 58.20± 0.13 | 66.30± 0.33 |
| Drip loss: % | | | | | |
| VBN: mg% | | | | | |
| TBA: mg Mal/kg of meat | | | | | |
| Color: Meat color | | | | | |

The experiment was performed to investigate the effect of nephrite jade on a change in the freshness of pork over time when the pork was stored in a jade bowl made of nephrite jade used in the present invention. Pork was stored either in a jade bowl or in a plain bowl (control) for 0, 4, 7, 14 or 21 days at 0° C or 4° C. One hundred gram (100 g) of pork cut from ham part was kept in each container, while the drip loss, meat color, pH, volatile basic nitrogen (VBN: protein-denaturation) and lipid oxidation (TBA) were measured.

### <Results>

① Drip loss was much less in port stored in jade bowl and tended to be considerably reduced as time passed by, regardless of the storage temperature.
② As an indicator of postmortem change of muscles, a distinct pH change is not produced by the type of the container, though pH at 4° C was higher than at 0° C.
③ VBN value which indicates the degree of protein denaturation was rather high at 0° C, for Day 14 and Day 21, and was definitely low at 4° C in pork stored in jade bowl as time passed by.
④ TBA value which indicates the degree of lipid oxidation was kept lower in pork stored in jade bowl regardless of the storage temperature.

### <Experimental Example 17>

The experiment is to examine the effects of a jade mug which might change the taste attributes of coffee when the coffee is served in the jade mug made of nephrite jade used in the present invention. The experiment was performed by Department of Food & Nutrition of Chung-Ang University and Korea Food Research Institute. The details are described below.

### 1. Object of the experiment

To examine the change in taste, aroma, aftertaste, and/or color of coffee when it is served in a jade mug or a plain mug (control).
2. Test method: Paired Preference Test
   ■ To test preference of one sample over the other sample
   ■ Test attributes: taste, aroma, aftertaste, color
3. Sensory panels
   20-25 seniors majored in food & nutrition at Chung-Ang University in Korea (who are experienced with panel test and have knowledge on the test method)
4. Test period
   ■ March to June, 1996
   ■ once a week
   ■ 10 times in total
5. Test container and type of beverage
   ■ A jade mug vs. a plain mug: Both having same appearance
   ■ Beverage: Instant coffee
6. Sample preparation
   1 tea spoon of coffee was mixed to 1/2 cup of hot water.
   7. Statistics: T-test (p≤ 0.05)

### <Results>

1. Taste: Coffee contained in jade mug imparted much less bitter taste (p≤ 0.05).
2. Color and Aftertaste: Jade mug tended to give better color and aftertaste, but statistically insignificant.
3. Aroma: Plain mug gave better coffee aroma than jade mug.

### <Conclusion>

Jade mug seems to make the taste of coffee mild (which is proved to be statistically Significant). Aftertaste and color of the coffee contained in jade mug was similar to or better than that contained in plain mug (not statistically significant).

The effect of nephrite jade powder contained in the matrix of the present invention was examined and the results are shown in Table 32.

**Table 32**

| <Primary Dermal Irritation Study> | |
|---|---|
| Sample | Jade powder |
| Appearance | White powder |
| Experimental method | Described below |
| Results | Described below |

Methods: Federal Register, Vol. 43, No. 163

CTFA (The Cosmetic, Toiletry and Fragrance Association, Washington ,D.C.) Technical Guideline Procedure: The procedure utilized a patch test technique on the abraded and intact skin of the albino rabbit. The hair was clipped from the back and flanks. Two areas of the back, spaced approximately 10 cm apart from each other, were designated for the position of the patches. One area was abraded by making 4 minor epidermal incisions (2 perpendicular to the other in a "tic-tac-toe pattern) in the area of the patch. The 1-inch square patches of surgical gauze were secured in place using thin rubber bands and adhesive tape. The sample was introduced under the patch 0.5 ml (g) each site. The entire trunk of the animal was then wrapped with rubberized cloth for the 24-hour period of exposure. The animals were restrained during the exposure period. After removal of the patches, resulting reactions at each site were evaluated on the basis of the weighted scores described below (Table 33).

### Evaluation of Skin Reactions

Erythema and Eschar Formation
   No erythema - 0
   Very slight erythema (barely perceptible) - 1
   Well defined erythema- 2
   Moderate to severe erythema - 3
   Severe erythema (beet redness) to slight eschar formation (injuries in depth) - 4
Edema Formation
   No edema - 0
   Very slight edema (barely perceptible) - 1
   Slight edema (edges of area well defined by raising) - 2
   Moderate edema (raised approximately 1 mm) - 3

**Table 33**

| Rabbits | 24 Hours | | | | 72 Hours | | | |
|---|---|---|---|---|---|---|---|---|
| | Intact | | Abraded | | Intact | | Abraded | |
| | ER | ED | ER | ED | ER | ED | ER | ED |
| #1 | 0 | 0 | 0 | 0 | 0 | 0 | 0 | 0 |
| #2 | 0 | 0 | 0 | 0 | 0 | 0 | 0 | 0 |
| #3 | 0 | 0 | 0 | 0 | 0 | 0 | 0 | 0 |
| #4 | 0 | 0 | 0 | 0 | 0 | 0 | 0 | 0 |
| #5 | 0 | 0 | 0 | 0 | 0 | 0 | 0 | 0 |
| #6 | 0 | 0 | 0 | 0 | 0 | 0 | 0 | 0 |

Conclusion: The sample is adjusted to be free from skin irritants and, thus, suitable for cosmetic use in skin-care products.

**Table 34**

| <Acute oral toxicity (0.5 g/100 g weight) test> | |
|---|---|
| Sample | Nephrite jade powder |
| Appearance | White powder |
| Experimental method | Described below |
| Result | Described below in Table 24 |

**Table 35**

| Mouse | Sex | Initial weight (g) | Dose (ml) | Later weight (g) | Toxicity |
|---|---|---|---|---|---|
| 1 | F | 207 | 1.0 | 219 | None |
| 2 | F | 211 | 1.1 | 226 | None |
| 3 | F | 215 | 1.1 | 225 | None |
| 4 | F | 208 | 1.0 | 217 | None |
| 5 | F | 200 | 1.0 | 213 | None |
| 6 | M | 227 | 1.1 | 235 | None |
| 7 | M | 216 | 1.1 | 224 | None |
| 8 | M | 205 | 1.0 | 218 | None |
| 9 | M | 210 | 1.1 | 224 | None |
| 10 | M | 212 | 1.1 | 221 | None |

Preparation of sample: The sample was extracted by boiling with sterile distilled water for 10 minutes. The extract was administered through a cannula with an amount of 0.5 g per 100 g weight of the animal.

Conclusion: The sample conforms to the standard stating that it should have no oral toxicity.

### <Experimental Example 18>

To investigate the effect of nephrite jade used in the present invention, this experiment was performed at Bio-information System Engineering Laboratory in Inha University in Korea by applicant's request.

The results of the bioengineering experiment of nephrite jade will now be described. As human body consists of 70% of water, there may be many relationships between the change of water and influences on human body. Therefore, the effects of nephrite jade on hard water and then, proliferation of Digitalis plant cells is examined.

### A. The change of hard water

### <Experiment 1>

50 ml of hard water (hardness: 100 ppm) artificially made was transferred to 4 flasks respectively and nephrite jade was placed in two of these flasks for 10 minutes.

The titration using EDTA (factor: 2.9412) was performed to determined the change of hardness. The buffer solution (pH 10) 1 ml and EBT as an indicator were used.

The change of hardness was determined by amount of EDTA used till the moment that the color of hard water is changed by EDTA. At this time, color may be restored to original color as time passes but in present experiment, determination was made at the changing point.

### <Result 1>

For hard water of 100 ppm, 1.70 ml of EDTA was used.

After treated with nephrite jade, 1.25 ml of EDTA was used. Thus, the hardness was reduced from 100 ppm to 73.53 ppm. That is to say, the decreasing effect of hardness was 26.47%.

### <Experiment 2>

200 ml of hard water (hardness: 100 ppm) prepared in Experiment 1 was transferred to a beaker and nephrite jade was dipped thereinto.

After 30 minutes, water filled in the beaker was divided into 3 flasks and the change of hardness was determined. In this experiment, EDTA was dropped until there was no more color change after the color of hard water was changed by EDTA so as to perform a more precise experiment and hardness at that point was measured.

### <Result 2>

The harnesses of 3 samples of hard water whose harnesses were 100 ppm before treatment with nephrite jade were changed into 89.62 ppm, 91.19 ppm, and 89.62 ppm, respectively, the average thereof being 90.14 ppm. Thus, the decreasing effect of hardness was 9.9%.

### <Experiment 3>

This experiment was performed with ordinary piped water. The piped water contained in a container was transferred to 6 flasks and the nephrite jade was placed on the bottom of 3 flasks among above flasks. The hardness was determined after 5 minutes.

### <Result 3>

The hardnesses of 3 samples of piped water, which was not treated with nephrite jade were all 97.48 ppm, and those of 3 samples of piped water, which was treated with nephrite jade, were all 91.19 ppm. Thus, the decreasing effect of hardness was 6.5%.

### B. The effect of nephrite jade on proliferation of Digitalis lanata suspended plant cell suspension

### ① Effects of nephrite jade on the proliferation of Digitalis lanata cells in the growth medium

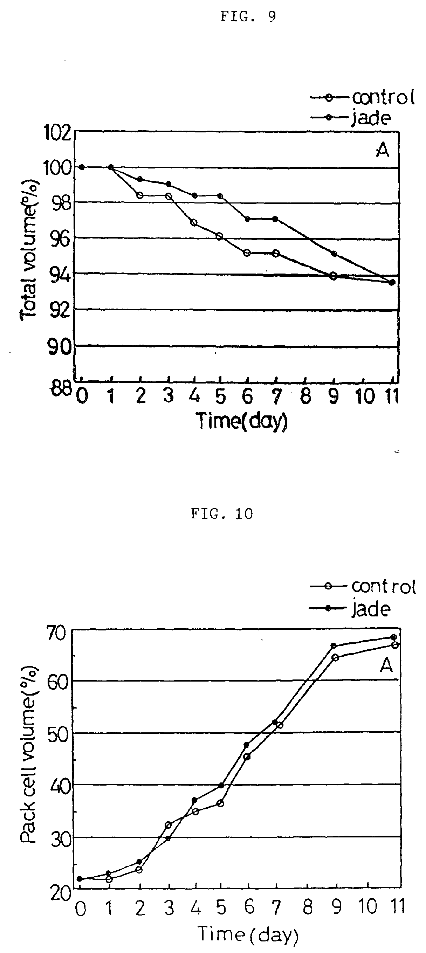

FIG. 9 is a graph showing the change of medium liquor's total volume of the cells proliferation in growth medium is observed for 11 days, and FIG. 10 is a graph showing the volume change of the Digitalis lanata cells. Since the depletion of ingredients in medium and evaporating of medium occur in proportion to increasing of the cells growing with time, overall change in volume of medium liquor reflects these figures. Specifically, the humidity and temperature of air have close relationship with evaporating of medium and these figures also influence the rate of cell growth.

As shown the drawings, total volume of medium liquor in case that nephrite jade was used was reduced little by little compared to that in control that nephrite jade was not used. When nephrite jade was used, the rate of cell growth opposed to evaporating of medium and depletion of nutrients was faster than that of the control and by this reason, rapid decreasing of medium depleted could be somewhat offset. As shown FIG. 10, which measures the volume change of packed cells only, from 4 days till 11 days after inoculation cell volume in case of using nephrite jade continuously was observed to increase more than that in control case of using no nephrite jade. Hence, when nephrite jade was used, the rate of cell growth was more rapid than that wherein nephrite jade was not used. These results are understood that reduction of total volume of medium liquor due to depletion of nutrients and medium evaporation was offset by rapid cell growth rate in this experiment using nephrite jade and these results in that decreasing rate of total volume of medium liquor will be retarded compared to control. In addition, the result comparing exact volume of proliferated cells shows the increasing tendency of cells' volume gradually after 4 days and is also understood to support above-mentioned conclusions.

The full weight and dry weight of the cells are measured as a most general index for determining the proliferating state of cells. The growth curve of every cells is generally represented in sigmoidal curve and this sigmoidal curve will be divided into 4 phases: the lag phase wherein there is no cell proliferation and no mass increasing, and which is an adapting time for medium; the exponential phase which shows a steep slope because mass is increased due to rapid proliferation rate after passing the lag phase; the stationary phase wherein cell growth reaches at maximum to what extent and proliferation is being held and there is no mass increasing; and the dead phase wherein overall cells' volume or mass is reduced because cells are dead by rupture due to depletion of nutrients, secretion of toxic components and saturation state of cell density.

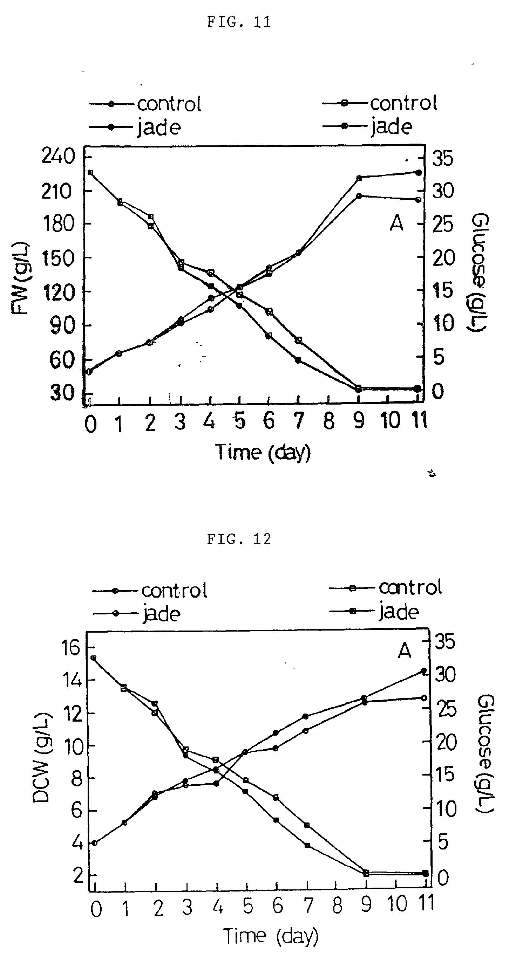

FIGS. 11 and 12 are results of measuring full weight and dry weight of cells. FIG. 11 follows above-mentioned 4 phases growth curve. The group using nephrite jade shows a little rapid proliferation rate than the control group using no nephrite jade after 7 days later, and proliferation in the former tends to continue until 10 days later while that in the latter is stopped and full weight of cells reduces. When the concentration change of glucose, a nutrient acting as a main metabolic substrate in medium, is compared, it is notable that cell growth in medium according to the present invention is continued at the point that the concentration of glucose approaches to zero by virtue of depletion of such nutrient, while, generally in the control medium (nephrite jade is not used), the proliferation is stopped and the rate of cell growth is decreased at the point that nutrient is being exhausted. This suggests that nephrite jade may have influences on cell growth. Such result is also shown in FIG. 12, which is a graph of measuring the dry weight of cells. In FIG. 12, the cell growth in medium of the present invention (nephrite jade is used) represents more rapid proliferation rate than that in the control medium (nephrite jade is not used) after 3 days later and the same appearance as in FIG. 11 appears since 9 days later. Therefore, the cells cultured in growth medium being close to nephrite jade shows good effect on cell growth compared to the control. When Digitalis lanata plant cells which have about 10 days' growth limit are cultured using nephrite jade, above cells maintain the stable state wherein cell necrosis does not happen without exchange with a new medium until 10 days later, and rather show the cell proliferation. By such reasons, the method according to the present invention may be applied for optimization of cell growth and concentration in a favorable manner as a process for producing the useful material.

### ② The effect of nephrite jade on pH change of the medium

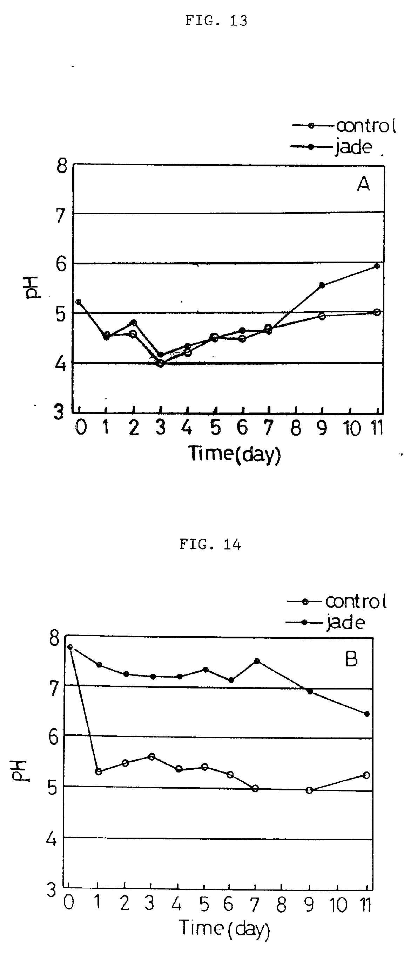

FIG. 13 shows the change of pH in the culture medium for cells and FIG. 14 shows the change of pH of the culture medium after adding nephrite jade powder.

In detail, FIG. 13 is a graph of measuring pH change in the medium using the nephrite jade. In control, pH tendency in the medium applied in typical plant cells also appears and pH decreases gradually with time and then, keeps to some level. However, when nephrite jade is used, pH tendency is similar to that of the control till 7 days later but pH increases little by little hereafter. Such phenomenon is obviously appeared in FIG. 14 which is a graph of measuring pH change in medium wherein nephrite jade powder is directed added. While pH value decreases continuously in the control medium wherein nephrite jade is not added, pH value of the medium wherein nephrite jade is added tends to maintain at some degree. It is supposed that ion reaction due to mineral ingredients contained in the nephrite jade may act as a cause for the above result.

### ③ The result of analysis experiment for water quality to nephrite jade

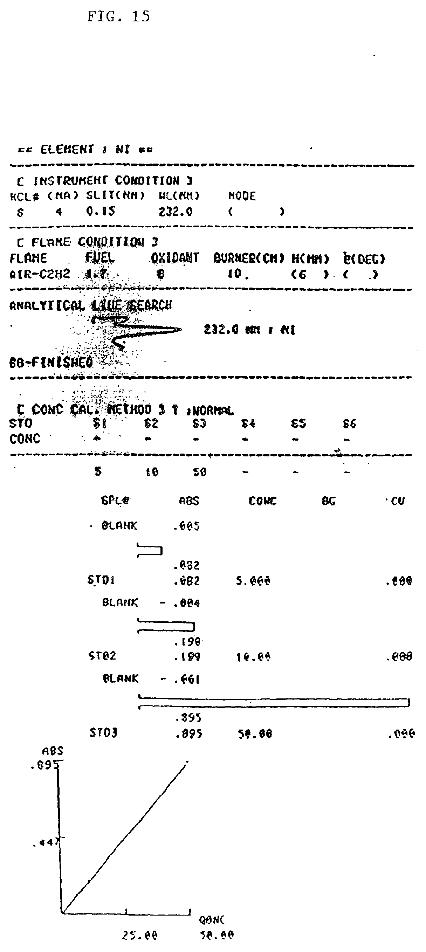

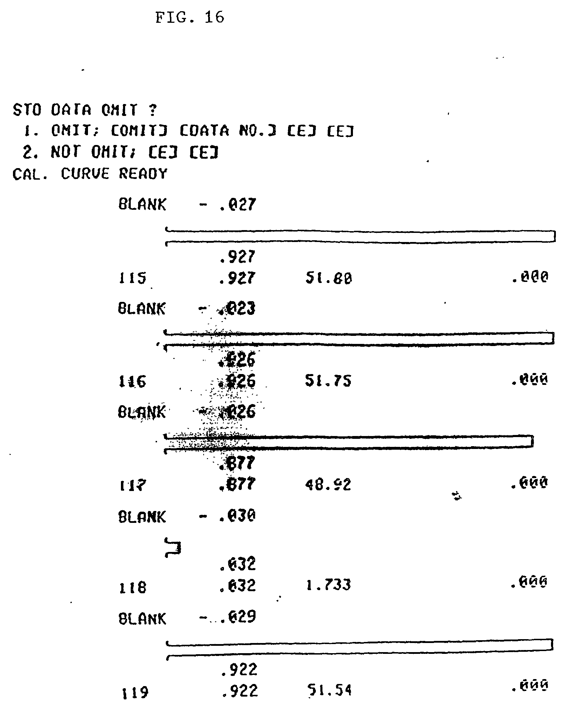

FIGS. 15 and 16 show the condition of the analytical instrument and the output of the results of the analysis, and the data shown in FIGS. 15 and 16 is arranged to each sample and the results are shown in Tables 36 through 39. In Table 36, each analysis attribute is measured to (sample 1) 48 hours later after the addition of a lump of 20 g of nephrite jade and there is no change in each analysis attribute and hence, there is no influence due to nephrite jade.

In Table 37, each analysis attribute is measured to (sample 2) 48 hours later after a lump of 20 g of nephrite jade is placed out of solution, and there is little change in each analysis attribute.

Also, in Table 39, there is no change in each analysis attribute of this analysis experiment wherein a lump of 20 g of nephrite jade is placed out of solution (sample 4). However, in case of sample 3, data measuring each analysis attribute against sample passed 48 hours after addition of 20 g of nephrite jade powder into the solution are shown in Table 38. As shown in Table 38, there are many changes and these changes are as follows.

The amount of Cr, Pb, Ni and Co, which are harmful to human body, are changed greatly after 48 hours. The amount of Cr before the addition of nephrite jade powder, i.e., before the reaction, is 45.30 mg and it becomes to zero 48 hours later after the addition of nephrite jade. Also, Pb is completely removed from 13.76 mg to zero. The amount of Ni decreases from 51.8 mg to 1.733 mg and the amount of Co also decreases from 52.69 mg to 11.94 mg. The amount of Co also decreases from 52.69 mg to 11.94 mg. The amount of Mg, one of essential ingredients for human body, increases from 48.36 mg to 55.74 mg and this results from the binding of Mg with component of nephrite jade itself but there is no change in hardness.

The hydrogen ion concentration of the distilled water appears as acidic of pH 3.5 but changes to neutral of pH 6.8, and the conductivity decreases rapidly. The adsorptive power is about 3-4 mmol. q (equivalent) per 1 g and it is a high value in physical sense.

**Table 36**

| <Result of analysis before and after the reaction (Sample 1: nephrite jade mass (20 g) in solution | | | |
|---|---|---|---|
| Item | Before reaction | After reaction (48 hours) | Amount of change |
| pH | 3.5 | 3.82 | - |
| Ni | 51.8 mg | 51.75 mg | - |
| Co | 52.69 mg | 52.54 mg | - |
| Cr | 45.30 mg | 43.88 mg | - |
| Mg | 48.36 mg | 48.59 mg | - |
| Pb | 13.76 mg | 13.90 mg | - |

**Table 37**

| <Result of analysis before and after reaction (Sample 2: nephrite jade mass (20 g) out of solution)> | | | |
|---|---|---|---|
| Item | Before reaction | After reaction (48 hours) | Amount of change |
| pH | 3.5 | 3.65 | - |
| Ni | 51.8 mg | 48.92 mg | - |
| Co | 52.69 mg | 49.83 mg | - |
| Cr | 45.30 mg | 41.23 mg | - |
| Mg | 48.36 mg | 47.97 mg | - |
| Pb | 13.76 mg | 15.1 mg | - |

**Table 38**

| <Result of analysis before and after reaction (Sample 3: nephrite jade powder (20 g) in solution)> | | | |
|---|---|---|---|
| Item | Before reaction | After reaction (48 hours) | Amount of change |
| pH | 3.5 | 6.8 | +3.3 |
| Ni | 51.8 mg | 1.733 mg | -50.06 mg |
| Co | 52.69 mg | 11.94 mg | -40.75 mg |
| Cr | 45.30 mg | 0 mg | -45.30 mg |
| Mg | 48.36 mg | 55.74 mg | +7.38 mg |
| Pb | 13.76 mg | 0 mg | -13.76 mg |

**Table 39**

| <Result of analysis before and after reaction (Sample 4: nephrite jade powder (20 g) out of solution)> | | | |
|---|---|---|---|
| Item | Before reaction | After reaction (48 hours) | Amount of change |
| pH | 3.5 | 3.7 | - |
| Ni | 51.8 mg | 51.53 mg | - |
| Co | 52.69 mg | 52.55 mg | - |
| Cr | 45.30 mg | 43.0 mg | - |
| Mg | 48.36 mg | 48.39 mg | - |
| Pb | 13.76 mg | 14.29 mg | - |

As described above, the proliferation of Digitalis lanata plant suspension cells which have been cultured for a week near nephrite jade was increased by about 30% as compared to the same cell culture without nephrite jade. The obtained result is very surprising because the result like this has not been occurred at all in the various experiments previously performed to examine the proliferation of Digitalis lanata plant cell for high concentration culture. In addition, in the experiment of change of hard water, was found the fact that nephrite jade softened the hard water even without contacting with water. In particular, in the experiments of the elemental analysis for distilled water in which nephrite jade powder has been precipitated, special results of increasing pH, reducing Ni and Co, removal of heavy metals such as Cr, Pb and increasing of Mg have occurred.

Though the effect of nephrite jade (powder) used in the present invention has not yet been clarified theoretically, the effects such as changing of hard water without contacting water, increasing the proliferation of Digitalis lanata plant suspension cell by 30%, reducing Ni and Co, and removing heavy metals such as Cr and Pb, which have human toxicity are surely due to the emission of electromagnetic waves shown in the results of the IR study and ionic reactions of inorganic components contained in nephrite jade.

The following experiment (Experimental Examples 19 through 23) is to examine the effects of nephrite jade used in the present invention, available from Chuncheon, Korea, and jade water prepared therefrom, on the sprouting and growth of seeds.

### A. Component analysis of nephrite jade and jade water

The components of nephrite jade available from Chuncheon, Korea were analyzed using a PW1,480 X RIW-Fuorescence Seguenflal Spectrometer. The analysis results showed that the nephrite jade contained SiO₂ as a main component and several trace elements necessary for growth of plants.

### B. Analysis of quality of supernatant jade water and underground water

The quality of supernatant jade water (underground water of a jade mine) and underground water was analyzed. The analysis result showed that no special trace elements were found in the underground water of a jade mine, i.e., supernatant jade water.

### <Experimental Example 19>

### <Comparison of the effects of supernatant jade water on sprouting of seeds>

① The sprouting experiment was performed such that 20 strong seeds of balsam, bean, rice, radish and crown daisy, were selected, 8 sheets of toilet paper are laid on a *Schale* (laboratory dish) to place seeds thereon, and then supernatant jade water, underground water and tap water are supplied.
② Seeds supplied with supernatant jade water and those supplied with tap water are spaced 50 m apart and let alone in a dark place at room temperature for 5 days, to observe the sprouting rates 5 times.
③ To investigate the supply range of supernatant jade water, each 20 seeds of radish and rice were supplied with jade water and underground water, the *Schales* having the seeds being spaced apart by 10 m, 20 m, 30 m, 40 m and 50 m.

The experimental results are described in Tables 40 and 41.

**Table 40**

| <Comparison of sprouting rates by supernatant jade water, underground water and tap water> | | | | | | | | | | | | |
|---|---|---|---|---|---|---|---|---|---|---|---|---|
| | Supernatant jade water | | | | Underground water | | | | Tap water | | | |
| | 2 | 3 | 4 | 5 | 2 | 3 | 4 | 5 | 2 | 3 | 4 | 5 |
| Rice | 10 | 45 | 85 | 96 | 6 | 43 | 76 | 91 | 4 | 42 | 74 | 90 |
| Radish | 27 | 78 | 90 | 96 | 26 | 73 | 87 | 94 | 24 | 72 | 86 | 94 |
| Crown Daisy | 20 | 46 | 64 | 64 | 18 | 45 | 60 | 61 | 18 | 41 | 61 | 62 |
| Pea | 9 | 23 | 48 | 51 | 9 | 21 | 47 | 51 | 8 | 20 | 43 | 52 |
| Cabbage | 28 | 79 | 91 | 91 | 24 | 73 | 90 | 90 | 23 | 71 | 90 | 90 |

The results suggest that supernatant jade water hastens the sprouting timings of the five kinds of seeds listed above.

**Table 41**

| <Comparison of sprouting rates of radish seeds when supplied with supernatant jade water and underground water> | | | | | | |
|---|---|---|---|---|---|---|
| | Jade water | 10 m | 20 m | 30 m | 40 m | 50 m |
| 1 day | 8 | 7 | 8 | 5 | 6 | 6 |
| 2 days | 27 | 28 | 29 | 22 | 21 | 22 |
| 3 days | 78 | 79 | 77 | 75 | 74 | 73 |
| 4 days | 90 | 89 | 89 | 90 | 89 | 89 |
| 5 days | 96 | 95 | 94 | 93 | 94 | 93 |

The results suggest that the aura of jade water is exerted over approximately 20 m and hastens the sprouting timing of radish seeds.

### <Experimental Example 20>

Comparison of effects of the aura of jade porcelain on sprouting of seeds

The sprouting experiment was performed such that 20 strong seeds of balsam, bean, rice, radish and crown daisy, were selected, 8 sheets of toilet paper are laid on 5 jade porcelain and 25 *Schales* to place seeds thereon to be spaced apart by 10 m, 20 m, 30 m, 40 m and 50 m. The sprouting results were observed at room temperature to determine the extent of the aura (see Table 42).
① The seeds were let alone in a dark place at room temperature for 5 days, to observe the sprouting rates 5 times.
② The statistical values are based on the total (100%) of 5 times

**Table 42**

| <Comparison of sprouting of seeds by jade porcelain (Number of sprouts)> | | | | | | | | | | | | |
|---|---|---|---|---|---|---|---|---|---|---|---|---|
| | Jade porcelain | | 10 m | | 20 m | | 30 m | | 40 m | | 50 m | |
| | 3 | 5 | 3 | 5 | 3 | 5 | 3 | 5 | 3 | 5 | 3 | 5 |
| Rice | 51 | 90 | 45 | 85 | 46 | 91 | 49 | 92 | 40 | 92 | 41 | 88 |
| Radish | 90 | 96 | 88 | 95 | 88 | 94 | 89 | 95 | 81 | 94 | 82 | 95 |
| Crown daisy | 54 | 70 | 51 | 58 | 50 | 71 | 49 | 69 | 45 | 69 | 46 | 70 |
| Pea | 25 | 60 | 24 | 61 | 24 | 58 | 23 | 60 | 20 | 59 | 19 | 58 |
| Cabbage | 74 | 93 | 72 | 95 | 74 | 96 | 71 | 94 | 69 | 94 | 68 | 93 |

The results suggest that the aura of jade water is exerted over approximately 30 m and hastens the sprouting timings of the seeds listed above.

### <Experimental Example 21>

### <Comparison of effects of jade porcelain and supernatant jade water on the growth of bean sprouts>

To examine the effects of jade porcelain and supernatant jade water on the growth of plants, rooting experiments of bean sprouts and onion were carried out.
① Each 30 beans for bean sprouts were placed on *Schales* for cultivating bean spouts and then the sprouting rates and growth rates were compared at room temperature for 10 days, with supernatant jade water, underground water and tap water being supplied.
② Each 30 beans were placed on jade porcelain, plain porcelain and plastic container and then the sprouting rates and growth rates were compared at room temperature for 10 days, with supernatant jade water, underground water and tap water being supplied.
③ 3 onions of the same size were assigned to rooting experiments, with supernatant jade water, underground water and tap water being supplied.
④ Jade porcelain and supernatant jade water container are spaced 50 m apart from *Schales* without jade material.
The experimental results are described below.
1) Growth of bean sprouts by jade porcelain
   Since the aura of jade porcelain hastened the sprouting timing, it was confirmed that the aura of jade porcelain had the effects of the growth rate of bean sprouts.
2) Growth of bean sprouts by supernatant jade water
   Since the aura of jade water hastened the sprouting timing, it was confirmed that the aura of the jade water had the effects of the growth of bean sprouts.

### <Experimental Example 22>

### <Comparison of freshness of plants by jade porcelain and supernatant jade water>

① The flowers of the same kind were put into jade porcelain and plain porcelain and their freshness was compared while supplying underground water.
② The flowers of the same kind were put into glass cups their freshness was compared while supplying supernatant jade water, underground water and tap water.
③ The jade porcelain and supernatant jade water were spaced 50 m apart from *Schales* without jade material.
④ The flowers used were each 5 roses, carnations and chrysanthemum plucked at the same time period and flowers of the same blooming extent were selected for observation with the naked eye once a day.
The results are described below.
1) Jade porcelain and freshness of plants
   The aura of jade porcelain was adjudged to slightly affect the freshness of plants.
2) Jade water and freshness of plants
   The aura of jade water was adjudged to slightly affect the freshness of plants.

### <Experimental Example 23>

### <The effect of nephrite jade powder on the growth of plants>

① Each 3 seeds of haricot bean, pea, radish and cabbage were sowed in pots with 50 g of nephrite jade powder and 50 g of fine sand for comparison of growth rates of plants.
② Due to difficulty of fertilization, radish and cabbage were not fertilized. However, seeds of haricot bean and pea were sowed with leaf mold and sand mixed in the same ratio.
③ The pots with nephrite jade powder and the plain pots were spaced 50 m apart from each other.

The results are described below.
1) Growth of pea
   Since the aura of nephrite jade powder hastened the sprouting timing of pea, it was adjudged to slightly affect the growth of pea.
2) Growth of haricot bean (m)
   Since the aura of nephrite jade powder hastened the sprouting timing of haricot bean, it was adjudged to slightly affect the growth of haricot bean.
3) Aquiculture of onion
   The aura of jade water is adjudged to considerably affect the rooting of onion.
4) Growth of radish
   The nephrite jade powder is adjudged to affect the sprouting timing of radish to promote the growth of radish.

As can be confirmed from the above-described experimental examples, the following conclusions are suggested.
① The nephrite jade available from Chuncheon, Korea has negative values of δ ¹⁸O having hardness of 6-6.5, and the measured values of δ D of the nephrite jade are controlled by a hydroxy group, the value of δ ¹⁸D of hydroxy group being considerably lower than that of the overall mineral and being out of the range of degenerated water, that is, δ D (%) =0∼-70.
② The components of nephrite jade samples are different depending on the collection place.
③ The effects of the aura generated from nephrite jade and jade porcelain on the sprouting and growth of plants extend approximately 30 m.
④ The effects of the aura of jade water on the sprouting and growth of plants extend approximately 20-30 m, which is slightly weaker than the aura of nephrite jade.
⑤ The sprouting experiments showed that both jade water and jade porcelain promoted the sprouting of seeds, although there was a slight difference between the control group and the treated group.
⑥ The growths of radish, pea, haricot bean and cabbage were promoted by nephrite jade powder, which suggests that acidified water can be improved by a new fertilization method using nephrite jade or jade water to be used for aquiculture. Also, the nephrite jade or jade water can be used as a neutralizer of drinking water, a removing agent of concentrated heavy metals or a promoting agent of the growth of plants.

### <Experimental Example 24>

This experiment is to examine the effects of jade products (jade tile, jade disk, jade powder, jade padding or the like) manufactured by nephrite jade collected from a jade mine located in Chuncheon, Korea, like in the nephrite jade ore used for jade extractant of the present invention, on the survival and reproduction of marine microorganism.

### (1) Microorganism source

In this experiment, sea water available from Daecheon, Korea, which is mainly used for manufacturing media, was used as the source of marine bacteria in a state of aged sea water in which most organic materials are decomposed by preserving the sea water in a dark place for 6 months. The marine photobacterium used in the experiment, that is, photobacterium phosphoreum is a Gram-negative bacterium, and the sample thereof was used to exhibit a luminescence intensity of 1.4× 1014 quanta/sec per each milliliter. The sample was diluted and about 1% of the diluted sample was taken for grafting. Then, to examine changes of the growth of cells and the luminescence intensity over time, the adsorption of 660 nm and the luminescence intensity of 1 ml sample were measured using a spectrophotometer (Milton-Roy MR 3000) and a luminometer, respectively.

### (2) Mediums used

The mediums used include Zobell mediums that have been traditionally used for cultivating marine bacteria, and sea water complete mediums, and the compositions thereof are as follows.

| <Zobell Medium> | |
|---|---|
| Bactotryptone | 3 g |
| Yeast extract | 1 g |
| FeCl₃ | 0.1 g |
| Aged sea water | 700 ml |
| Distilled water | 300 ml |

| <Sea water complete medium> | |
|---|---|
| Bactortryptone | 5 g |
| Yeast extract | 3 g |
| Glycerol | 3 ml |
| Aged sea water | 750 ml |
| Distilled water | 250 ml |
| Petri-film | 3 M |

The petri-film as the medium used for colony forming unit (CFU) was commercially available from 3M Innovative Properties Company. 1 ml of target sample was applied to the film, pressed and cultivated for 3 days. Then, the number of red colonies was counted and the colony was photographed by a digital camera (Kodak DC-120).

The jade tile, jade disk, jade powder, jade ore, jade padding or the like used in the experiments were sampled from nephrite jade available from Chuncheon, Korea (produced by Ocksanga Co., Ltd., Korea). The respective experimental groups were assigned to each experiment after being cultivated in a 100 ml cultivation flask. The jade powder used was 1 g per 100 ml of sea water, and the jade ore used was 1 g. Also, the jade padding used was 1 g in total weight.

### (3) Experimental contents

### A. Change of pH

100 ml of sea water was used as a control group and 1 g of jade powder was added thereto. Then, the mixture was stirred with a magnetic stirrer for 30 minutes, and centrifugation was performed to obtain supernatant jade water. Then, the pH change of supernatant jade water was measured by the concentration of jade powder.

### B. Change of number of colonies

General sea water was used by diluting the same with sterile sea water.

### <Solid medium>

Petri film
Zobell plate

### <Liquid medium>

Cultivated on jade tile
Cultivated on jade disk
Cultivated with jade ore

### C. Change of luminescence intensity

The sample of photobacterium phosphoreum was used with a sea water complete medium to exhibit a luminescence intensity of 1.4× 10¹⁴ quanta/sec per each milliliter. The sample was diluted and about 1% of the diluted sample was taken for grafting. Then, to examine changes of the growth of cells and the luminescence intensity over time, the adsorption of 660 nm and the luminescence intensity of 1 ml sample were measured using a spectrophotometer (Milton-Roy MR 3000) and a luminometer, respectively.

### (4) Measurement of biomass

### Measurement of biomass using firefly luciferase illumination system

There are various methods of measuring biomass. However, a method of measuring the quantity of ATP's (adeonosine-5-triphosphates), the ATP being a bioindicator since it is commonly contained in all living things, has been used for measurement of the biomass of an invisible microorganism. ATP's are essential factors for maintaining the lives of organisms higher than bacteria and are generated by the metabolism of various kinds of organisms to be used as a direct fuel in cells. Since the ATP is rapidly decomposed into ADP (adenosine-5-diphosphate) in dead organisms, it can be a good indicator for measurement of the biomass of a living organism. On the other hand, if the biomass is estimated by the naked eye or microscope, it is quite difficult to distinguish live and dead organisms the case of microorganisms. In the case of microorganisms, a cultivation method cannot be used for measurement of the biomass of a viable but non-cultural (VBNC) cell. Also, less than 1% of marine organisms can only be cultivated by a general cultivation method.

Since the extinction rate of living organisms on the surface of jade products is very important in the samples used in the experiment of the invention, it is very important to accurately measure the biomass. ATP measurement was done by extracting a sediment by means of a buffer. Here, various chromatographic methods including High Performance Liquid Chromatography (HPLC) or Thin Layer Chromatography (TLC) can be used. In this study, a bioluminescence method for the firefly that generates light using ATP was employed. Although the HPLC or TLC method allows accuracy in the measurement result, pretreatment of samples is very complex, requiring much time and effort, and the detection accuracy thereof is low due to use of UV adsorption or pigmenting dependence. A firefly luciferase generates light of 530 nm while converting luciferin into oxyluciferin using 1M of ATP and 1M of oxygen, and the luminescence efficiency is substantially 100%, highest among known bioluminescence systems. Measurement of the quantity of ATO using the firefly luciferase is recognized as the most sensitive method, excluding the method using radioactive isotropes.

### (5) Experimental results

### 5.1. Change of pH

Sea water generally exhibits weak alkaline pH, i.e., about 8.1, which becomes gradually neutral by the metabolic activity of microorganisms contained in the sea water when it is left intact for a long time. This is well defined by the control group of Table 21. In the presence of jade products, a slight change of pH occurred upon addition thereof, that is, within 1 hour. Both jade powder and jade ore showed a change of pH, approximately 7.8, that is, weak alkaline level. This tendency is mitigated in the case of jade tile that is not in direct contact with the sea water solution, that is, substantially similar to that of the control group. The results suggest that materials eluted from the jade product itself to ambient solution, representatively silica (SiO₂), changed the acidity.

**Table 43**

| <Change of pH of sea water by jade products> | | | |
|---|---|---|---|
| | 1 hour | 2 hours | 3 hours |
| Control group | 8.18 | 8.16 | 8.15 |
| Jade powder | 8.01 | 7.75 | 7.55 |
| Jade padding | 8.10 | 7.80 | 7.64 |
| Jade tile | 8.12 | 8.05 | 7.95 |
| Jade disk | 8.1 | 8.0 | 7.8 |
| Jade ore | 8.1 | 8.0 | 7.8 |

### 5.2. Change of number of colonies

100 ml of standard sea water was placed in a sterilized bottle and various jade products were added thereto by each given amount. The bottle containing the jade products was shaken at about 100 rpm for cultivation, and each 1 ml was taken by time to then be grafted using a petri-film. The number colonies produced after 3 day cultivation was counted (see Table 44).

**Table 44**

| <Change of number of colonies in sea water by jade products> | | | | |
|---|---|---|---|---|
| | 1 day | 2 days | 3 days | 7 days |
| Control group | 324 | 336 | 328 | 319 |
| Jade powder | 284 | 272 | 243 | 217 |
| Jade padding | 274 | 265 | 232 | 204 |
| Jade tile | 283 | 274 | 281 | 295 |
| Jade disk | 272 | 261 | 255 | 275 |
| Jade ore | 269 | 261 | 253 | 282 |

From the findings of Table 44, all jade products showed a noticeable decrease in the number of marine bacteria. During an early stage, jade padding and jade ore showed a high decrease rate. After 7 day cultivation, jade powder and jade padding showed the highest decrease rate. Jade padding, in particular, had the highest decreasing effect, approximately 64% that of the control group, after 7 days.

### 5.3. Change of luminescence intensity

In view of the change of luminescence intensity of photobacterium phosphoreum, there was no considerable change by jade products used in the experiment. Although the change was as weak as 10% or less, a decreasing tendency was shown in all samples. This suggests that jade products serve to suppress the activity of marine bacteria, as shown in the above-described experiments. The photobacterium phosphoreum is a typical bonding bacterium that is easily bonded to organic mass present in the sea water and propagated to exhibit luminescence, which increases the possibility of penetrating into the interior of fish together with fish-bait (see Table 45)

**Table 45**

| <Change of luminescence intensity of photobacterium phosphoreum by jade products> | | | |
|---|---|---|---|
| | 1 hour | 2 hours | 24 hours |
| Control group | 100 | 100 | 100 |
| Jade powder | 94 | 93 | 88 |
| Jade padding | 92 | 90 | 85 |
| Jade tile | 95 | 92 | 84 |
| Jade disk | 95 | 90 | 82 |
| Jade ore | 93 | 90 | 82 |

### 5.4. Adhesion tendency

It is known that bacteria in the sea water are primarily adhered to the surface of the jade products immersed in the sea water to form a bio-film and other marine organisms are sequentially adhered by the action of the bio-film as a basal material, to cause bio-fouling. Although it has not yet been clarified from which the antibiotic functions of jade products originate, the antibiotic functions have been confirmed through the above-described experiment examples. Thus, the jade products used in the present experiment, which serve to suppress the formation of a bio-film can be used as valuable materials.

The experimental results showed that the bacterial adhesion tendency was 92-95% that of the control group, exhibiting an adhesion reducing effect of 5-8% (see Table 46).

**Table 46**

| <Adhesion tendency of marine bacteria on the surface of jade products (1 week cultivation)> | | |
|---|---|---|
| | Number of bacteria adhered | Count × 10⁵ |
| Control group | 100 | 3.2 |
| Jade tile | 95 | 3.04 |
| Jade disk | 93 | 2.97 |
| Jade ore | 92 | 2.94 |

### (4) Result

As seen from the above-described experimental examples, injection of nephrite jade used in the present invention reduced 10-40% of general bacteria from sea water, which suggests that the present experiment is worth trying in a pilot-sized cultivation tank. In particular, since jade tile can be used as the material of the bottom of a cultivation tank, the experiment of the initial survival rate of fry can be performed in a tank of 2 m width, 3 m width and 1 m depth.

### <Experimental Example 25>

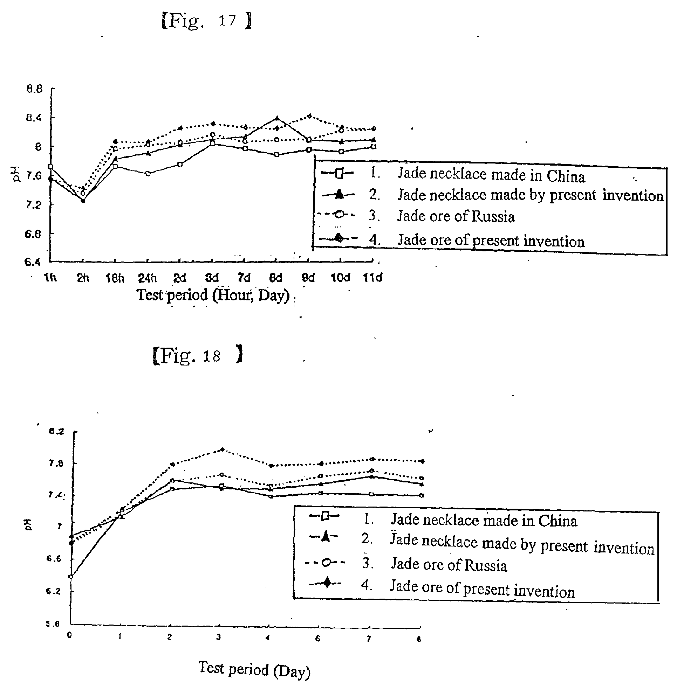

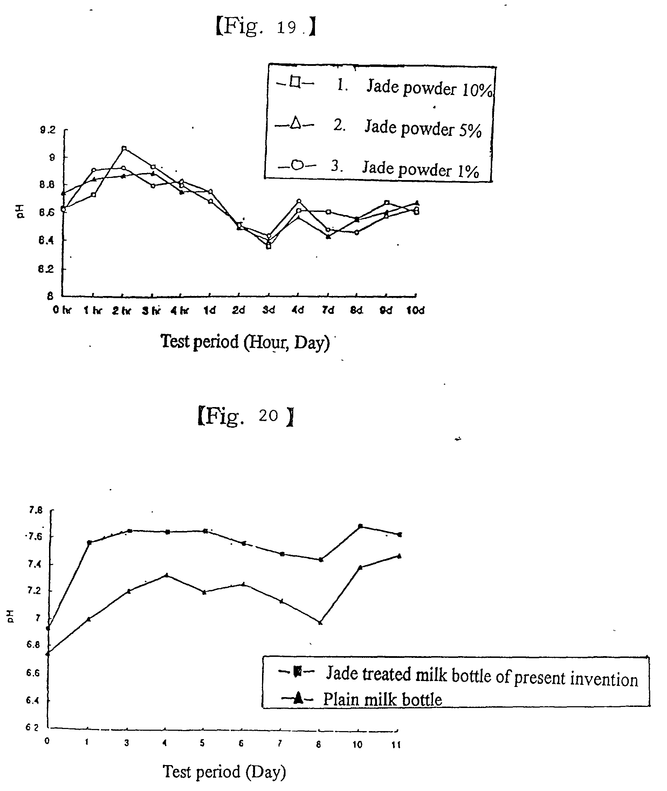

This experiment is to examine the change in pH over time when jade ore, jade necklace and jade powder were immersed into or added to water supplied from various sources for 8 to 11 days (see FIGS. 17 through 20).

The jade materials used in the experiment were jade ores available from Chuncheon, Korea (Ocksanga Co., Ltd.) and Russia, jade necklaces produced from nephrite jade available from Chuncheon, Korea and China, and jade powder produced from nephrite jade available from Chuncheon, Korea. The water used for measurement of pH included water from a general purifier, underground water and strong acidic solution (pH 3.2).

### <Results>

① When jade ore and jade necklace were immersed into the water from a general purifier and underground water, the pH levels of the jade ore and necklace produced from the nephrite jade available from Chuncheon, Korea, used in the present invention, were higher than those made in China and Russia.
② 10%, 5% and 1% of jade powder were added to a strong acidic solution of pH 3.2 and the average pH levels measured for 10 days were 8.59± 0.10, 8.58 ± 0.13 and 8.57± 0.11, respectively, exhibiting little difference by percent of the jade powder added.
③ During the measurement period, the pH levels of the strong acidic solution in the jade treated milk bottle were consistently higher than in a plain milk bottle.

As shown in the above findings, the jade ore, jade powder and jade necklace made from the nephrite jade available from Chuncheon, Korea increased the pH compared to those made in Russia and China, but there was no statistically significant difference.

The above-described experimental results fully verify that the matrix containing nephrite jade powder of the present invention has advantageous effects to human body in virtue of the inherent properties of nephrite jade powder and the medical effects of nephrite jade.

As described above, according to the present invention, the matrix containing nephrite jade powder can improve physical and mechanical strengths of a variety of products using the matrix. In particular, the nephrite jade contained in the matrix has excellent effects of activating cellular functions of human body and promoting blood circulation and metabolism.

## Claims

1. A matrix prepared by adding a sample of 360-1000 mesh particle size, containing 1-4.5 % by weight of nephrite jade powder, 1-3 % by weight of silicone powder and 0.5-1 % by weight of talcum powder, to raw material resin, based on the total weight of the raw material resin for molding a variety of products.

2. The matrix according to claim 1, wherein the jade ore is cryptocrystalline tremolite of a negative value of σ¹⁸O.

3. A process for preparing a matrix containing nephrite jade powder as a main component, comprising the steps of:
adding a sample containing 1-4.5 % by weight of nephrite jade powder, 1-3 % by weight of silicone powder and 0.5-1 % by weight of talcum powder, the sample having the particle size of 360-1000 mesh, to raw material resin for forming molded articles, based on the total weight of the raw material resin;
heating the mixture at a temperature of 135-145°C; and
molding the resultant mixture to convert the same into a compound.
